# EUROPEAN PATENT APPLICATION

(11) **EP 4 832 587 A1**
(43) Date of publication of application: **28.10.2026**
(21) Application number: 25745382.9
(22) Date of filing: 24.01.2025
(51) Int. Cl.: H04W 48/14, H04W 52/02, H04W 72/21, H04W 48/20, H04W 48/10

(54) **METHOD AND DEVICE FOR RESELECTING ON-DEMAND SIB1 TRANSMISSION CELL IN NEXT GENERATION MOBILE COMMUNICATION SYSTEM**

(30) Priority: 24.01.2024 KR 20240011218
(71) Applicant: Samsung Electronics Co., Ltd., Suwon-si, Gyeonggi-do 16677 (KR)
(72) Inventor: JUNG, Sangyeob, Suwon-si, Gyeonggi-do 16677 (KR); BAEK, Sangkyu, Suwon-si, Gyeonggi-do 16677 (KR); JUNG, Byounghoon, Suwon-si, Gyeonggi-do 16677 (KR)
(74) Representative: Gulde & Partner
(86) International application number: PCT/KR2025/001442
(87) International publication number: WO 2025/159560

(57) **Abstract**

The present disclosure relates to a 5G or 6G communication system for supporting higher data transmission rates. This method comprises the steps of: receiving, from a serving cell, at least one piece of system information including cell reselection priority configuration information and/or wake up signal (WUS) configuration information; determining a final candidate target cell on the basis of the cell reselection priority configuration information; determining, on the basis of the WUS configuration information, whether the final candidate target cell is a cell that supports an on-demand system information block 1 (SIB1); transmitting a WUS to the final candidate target cell if the determined final candidate target cell is a cell that supports the on-demand SIB1; receiving, as a response to the WUS transmission, the SIB1 from the final candidate target cell; and, on the basis of the SIB1, determining whether to perform cell reselection for the final candidate target cell.

## Description

### Technical Field

The disclosure relates to operations of a terminal and base station in a mobile communication system. More particularly, the disclosure relates to a method and apparatus for a terminal to reselect a cell transmitting on-demand system information block 1 (SIB 1).

### Background Art

Fifth generation (5G) mobile communication technology defines a wide frequency band to enable fast transmission speed and new services, and can be implemented not only in a sub-6 GHz frequency band ("sub 6 GHz") such as 3.5 GHz but also in an ultra-high frequency band ("above 6 GHz") called mmWave such as 28 GHz or 39 GHz. In addition, 6G mobile communication technology called "beyond 5G system" is being considered for implementation in a terahertz (THz) band (e.g., band of 95 GHz to 3 THz) to achieve transmission speed that is 50 times faster and ultra-low latency that is reduced to 1/10 compared with 5G mobile communication technology.

In the early days of 5G mobile communication technology, to meet service support and performance requirements for enhanced mobile broadband (eMBB), ultra-reliable and low-latency communication (URLLC), and massive machine-type communications (mMTC), standardization has been carried out regarding beamforming for mitigating the pathloss of radio waves and increasing the propagation distance thereof in the mmWave band, massive MIMO, support of various numerology for efficient use of ultra-high frequency resources (e.g., operating multiple subcarrier spacings), dynamic operations on slot formats, initial access schemes to support multibeam transmission and broadband, definition and operation of bandwidth parts (BWP), new channel coding schemes such as low density parity check (LDPC) codes for large-capacity data transmission and polar codes for reliable transmission of control information, L2 pre-processing, and network slicing for providing a dedicated network specialized for a specific service.

Currently, discussions are underway to improve 5G mobile communication technology and enhance performance thereof in consideration of the services that the 5G mobile communication technology has initially intended to support, and physical layer standardization is in progress for technologies such as V2X (Vehicle-to-Everything) that aims to help a self-driving vehicle to make driving decisions based on its own location and status information transmitted by vehicles and to increase user convenience, new radio unlicensed (NR-U) for the purpose of system operation that meets various regulatory requirements in unlicensed bands, low power consumption scheme for NR terminals (UE power saving), non-terrestrial network (NTN) as direct terminal-satellite communication to secure coverage in an area where communication with a terrestrial network is not possible, and positioning.

In addition, standardization in radio interface architecture/protocol is in progress for technologies such as intelligent factories (industrial Internet of things, IIoT) for new service support through linkage and convergence with other industries, integrated access and backhaul (IAB) that provides nodes for network service area extension by integrating and supporting wireless backhaul links and access links, mobility enhancement including conditional handover and dual active protocol stack (DAPS) handover, 2-step random access (2-step RACH for NR) that simplifies the random access procedure; and standardization in system architecture/service is also in progress for the 5G baseline architecture (e.g., service based architecture, service based interface) for integrating network functions virtualization (NFV) and software defined networking (SDN) technologies, and mobile edge computing (MEC) where the terminal receives a service based on its position.

When such a 5G mobile communication system is commercialized, connected devices whose number is explosively increasing will be connected to the communication networks; accordingly, it is expected that enhancement in function and performance of the 5G mobile communication system and the integrated operation of the connected devices will be required. To this end, new research will be conducted regarding 5G performance improvement and complexity reduction, AI service support, metaverse service support, and drone communication by utilizing extended reality (XR) for efficiently supporting augmented reality (AR), virtual reality (VR), and mixed reality (MR), artificial intelligence (AI), and machine learning (ML).

Further, such advancement of 5G mobile communication systems will be the basis for the development of technologies such as new waveforms for ensuring coverage in the terahertz band of 6G mobile communication technology, full dimensional MIMO (FD-MIMO), multi-antenna transmission such as array antenna or large scale antenna, metamaterial-based lenses and antennas for improved coverage of terahertz band signals, high-dimensional spatial multiplexing using orbital angular momentum (OAM), reconfigurable intelligent surface (RIS) technique, full duplex technique to improve frequency efficiency and system network of 6G mobile communication technology, satellites, AI-based communication that utilizes artificial intelligence (AI) from the design stage and internalizes end-to-end AI support functions to realize system optimization, and next-generation distributed computing that realizes services whose complexity exceeds the limit of terminal computing capabilities by utilizing ultra-high-performance communication and computing resources.

### Disclosure of Invention

### Technical Problem

The disclosure proposes a method for a terminal to reselect a cell that transmits on-demand system information block 1 (SIB 1).

The technical objectives to be achieved in the embodiments of the disclosure are not limited to those mentioned above, and other technical objectives not mentioned will be clearly understood by those skilled in the art to which the disclosure belongs from the description below.

### Solution to Problem

To solve these problems, the disclosure provides a method performed by a terminal in a wireless communication system. The method may include: receiving, from a serving cell, at least one piece of system information including at least one of cell reselection priority setting information or wake-up signal (WUS) configuration information; determining a final candidate target cell based on the cell reselection priority setting information; determining whether the final candidate target cell is a cell that supports System Information Block 1 (SIB1) on demand based on the WUS configuration information; transmitting a WUS to the final candidate target cell in case that the final candidate target cell is a cell that supports SIB1 on demand; receiving SIB1 from the final candidate target cell in response to transmitting the WUS; and determining whether to perform cell reselection to the final candidate target cell based on SIB1.

To solve these problems, the disclosure provides a method performed by a base station in a wireless communication system. The method may include: transmitting Master Information Block (MIB) and System Information Block 1 (SIB1) to a terminal; and transmitting, to the terminal, at least one piece of system information including at least one of cell reselection priority setting information or wake-up signal (WUS) configuration information, wherein the WUS configuration information may be used to determine whether a final candidate target cell determined based on the cell reselection priority setting information is a cell that supports SIB1 on demand, wherein in case that the final candidate target cell is a cell that supports SIB1 on demand, the final candidate target cell may transmit SIB1 to the terminal in response to a WUS, and wherein SIB1 may be used to determine whether to perform cell reselection to the final candidate target cell.

To solve these problems, the disclosure provides a terminal in a wireless communication system. A terminal may include: a transceiver for transmitting and receiving signals; and a controller, wherein the controller may be configured to: receive, from a serving cell, at least one piece of system information including at least one of cell reselection priority setting information or wake-up signal (WUS) configuration information; determine a final candidate target cell based on the cell reselection priority setting information; determine whether the final candidate target cell is a cell that supports System Information Block 1 (SIB1) on demand based on the WUS configuration information; transmit a WUS to the final candidate target cell in case that the final candidate target cell is a cell that supports SIB1 on demand; receive SIB1 from the final candidate target cell in response to transmitting the WUS; and determine whether to perform cell reselection to the final candidate target cell based on SIB1.

To solve these problems, the disclosure provides a base station supporting serving cells in a wireless communication system. The base station may include: a transceiver for transmitting and receiving signals; and a controller, wherein the controller may be configured to: transmit Master Information Block (MIB) and System Information Block 1 (SIB1) to a terminal; and transmit, to the terminal, at least one piece of system information including at least one of cell reselection priority setting information or wake-up signal (WUS) configuration information, wherein the WUS configuration information may be used to determine whether a final candidate target cell determined based on the cell reselection priority setting information is a cell that supports SIB1 on demand, wherein in case that the final candidate target cell is a cell that supports SIB1 on demand, the final candidate target cell may transmit SIB1 to the terminal in response to a WUS, wherein SIB1 may be used to determine whether to perform cell reselection to the final candidate target cell.

### Advantageous Effects of Invention

According to an embodiment of the disclosure, the method of reselecting a cell transmitting SIB1 on an on-demand basis can contribute to energy saving of the base station.

The effects obtainable in the disclosure are not limited to those mentioned in various embodiments, and other effects not mentioned will be clearly understood by those skilled in the art to which the disclosure pertains from the description below.

### Brief Description of Drawings

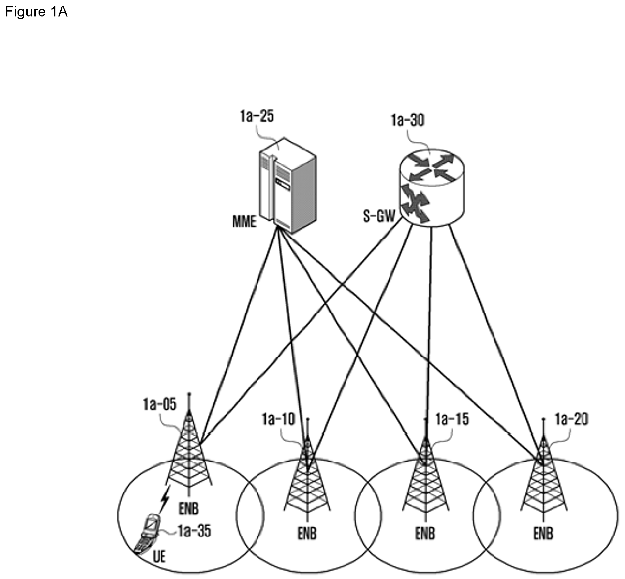

FIG. 1A is a diagram illustrating the architecture of a long term evolution (LTE) system according to an embodiment of the disclosure.

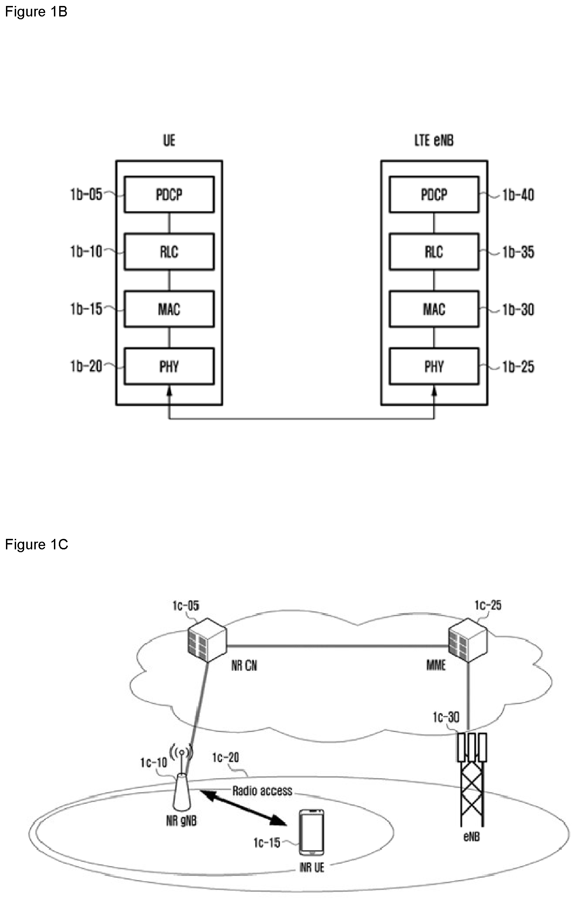

FIG. 1B is a diagram illustrating the structure of radio protocols in a long term evolution (LTE) system according to an embodiment of the disclosure.
FIG. 1C is a diagram illustrating the architecture of a next-generation mobile communication system according to an embodiment of the disclosure.

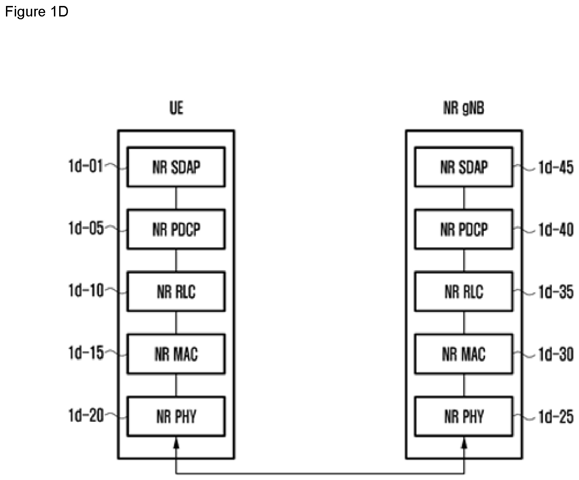

FIG. 1D is a diagram illustrating the structure of radio protocols in a next-generation mobile communication system according to an embodiment of the disclosure.

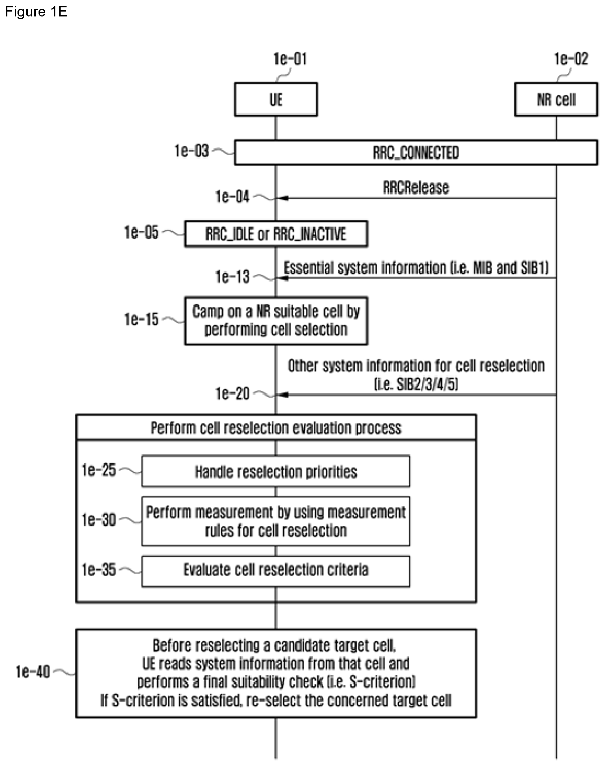

FIG. 1E is a diagram illustrating a procedure in which a UE in RRC idle mode (RRC_IDLE) or RRC inactive state (RRC_INACTIVE) reselects a cell that periodically transmits essential system information in a next-generation mobile communication system according to an embodiment of the disclosure.

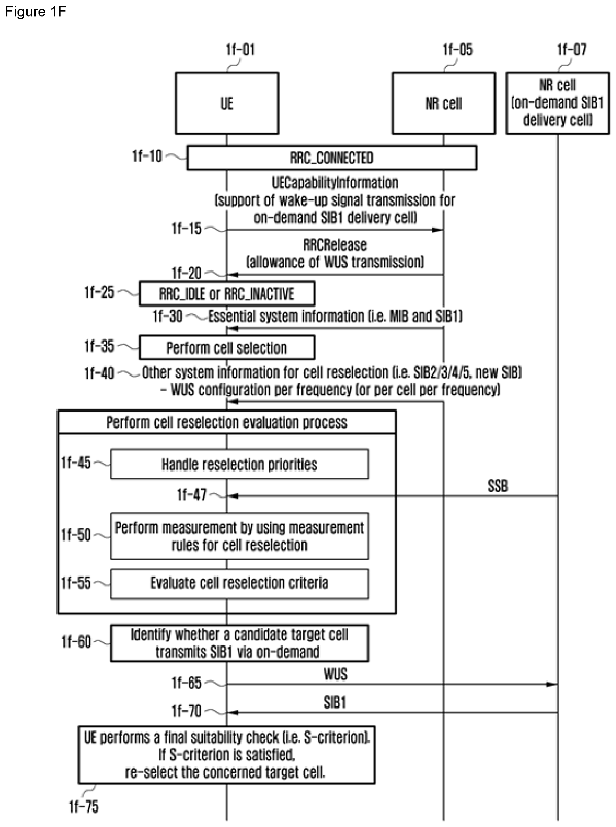

FIG. 1F is a diagram illustrating a procedure in which a UE in RRC idle mode (RRC_IDLE) or RRC inactive state (RRC_INACTIVE) reselects a cell that transmits system information block 1 (SIB1) on an on-demand basis according to an embodiment of the disclosure.

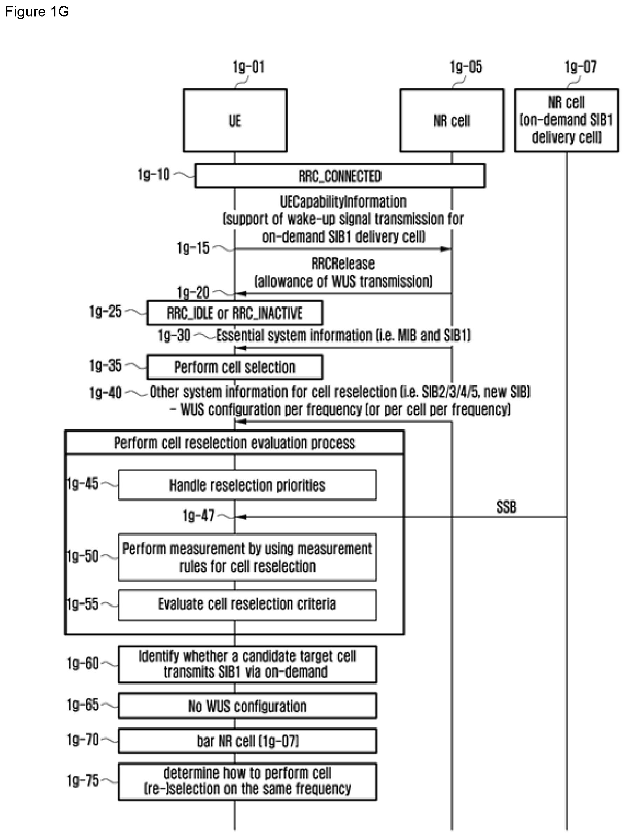

FIG. 1G is a diagram illustrating a procedure in which a UE in RRC idle mode (RRC_IDLE) or RRC inactive state (RRC_INACTIVE) reselects a cell that transmits system information block 1 (SIB1) on an on-demand basis in a next-generation mobile communication system according to an embodiment of the disclosure.

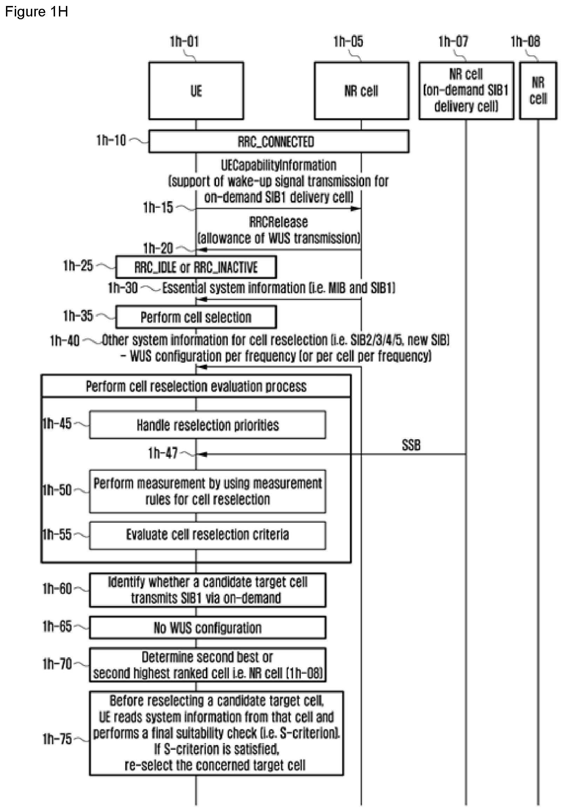

FIG. 1H is a diagram illustrating a procedure in which a UE in RRC idle mode (RRC_IDLE) or RRC inactive state (RRC_INACTIVE) reselects a cell that transmits system information block 1 (SIB1) on an on-demand basis according to an embodiment of the disclosure.

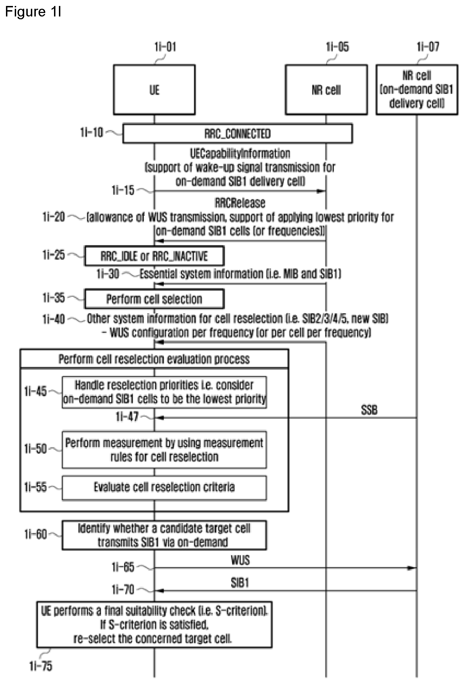

FIG. 1I is a diagram illustrating a procedure in which a UE in RRC idle mode (RRC_IDLE) or RRC inactive state (RRC_INACTIVE) reselects a cell that transmits system information block 1 (SIB1) on an on-demand basis according to an embodiment of the disclosure.

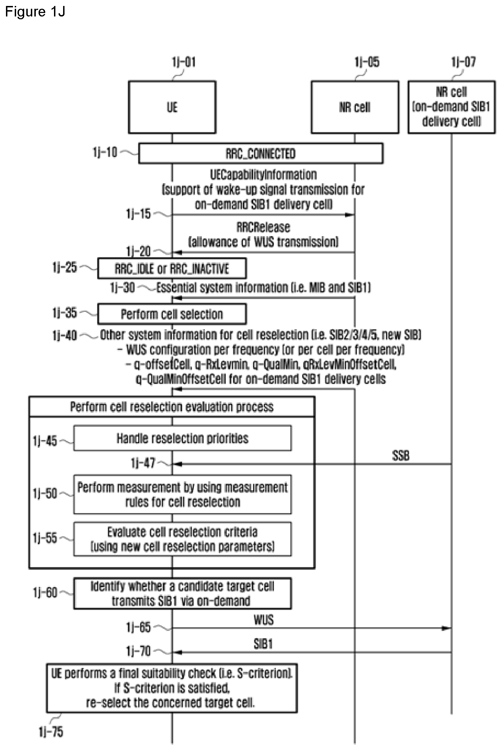

FIG. 1J is a diagram illustrating a procedure in which a UE in RRC idle mode (RRC_IDLE) or RRC inactive state (RRC_INACTIVE) reselects a cell that transmits system information block 1 (SIB1) on an on-demand basis according to an embodiment of the disclosure.

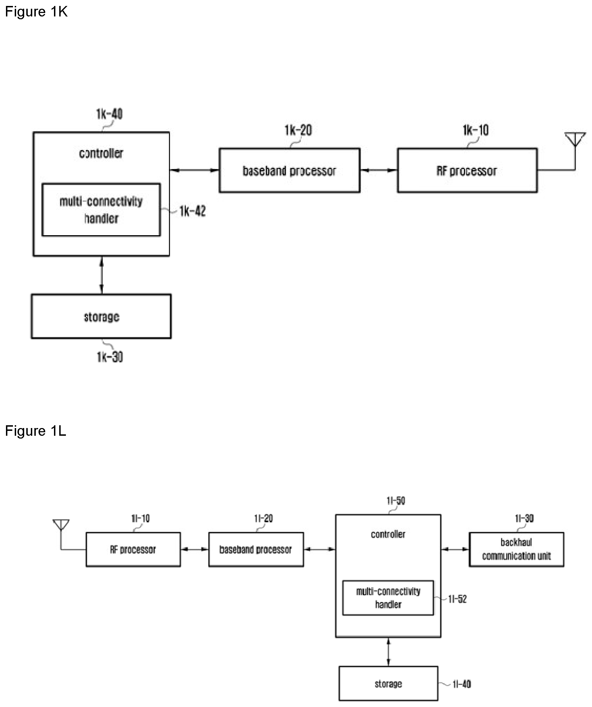

FIG. 1K is a block diagram illustrating the internal structure of a UE according to an embodiment of the disclosure.
FIG. 1L is a block diagram illustrating the internal structure of a New Radio (NR) base station according to an embodiment of the disclosure.

### Mode for the Invention

Hereinafter, the operating principle of the present disclosure will be described in detail with reference to the accompanying drawings. In explaining the disclosure below, descriptions of well-known functions and structures incorporated herein may be omitted to avoid obscuring the subject matter of the disclosure. The terms described below are defined in consideration of their functions in the disclosure, and these may vary depending on the intention of the user, the operator, or the custom. Hence, their meanings should be determined based on the overall contents of this specification.

In the following description of the disclosure, specific descriptions of related known functions or configurations will be omitted if it is determined that such detailed descriptions may unnecessarily obscure the subject matter of the disclosure. Embodiments of the disclosure will be described below with reference to the attached drawings.

Those terms used in the following description for identifying an access node, indicating a network entity, indicating a message, indicating an interface between network entities, and indicating various identification information are taken as illustration for ease of description. Accordingly, the disclosure is not limited by the terms to be described later, and other terms referring to objects having an equivalent technical meaning may be used.

In the following description, the "base station (BS)", as a main agent that allocates resources to a terminal, may be at least one of Node B, eNode B, gNode B, radio access unit, base station controller, or node on a network. The "terminal" may include a user equipment (UE), a mobile station (MS), a cellular phone, a smartphone, a computer, or a multimedia system capable of performing a communication function. In the disclosure, downlink (DL) refers to a wireless transmission path through which a base station transmits a signal to a terminal, and uplink (UL) refers to a wireless transmission path through which a terminal transmits a signal to a base station. Further, embodiments of the disclosure may be described by using LTE or LTE-A systems as an example, but the embodiments of the disclosure may be applied to other communication systems having similar technical backgrounds or channel configurations. For example, this may include the 5th generation mobile communication technology (5G, new radio, NR) developed after LTE-A, and the term 5G hereinafter may be a concept that includes existing LTE, LTE-A, and other similar services. Further, it should be understood by those skilled in the art that the disclosure is applicable to other communication systems without significant modifications departing from the scope of the disclosure. Meanwhile, it is known to those skilled in the art that blocks of a flowchart (or sequence diagram) and a combination of flowcharts may be executed by computer program instructions.

These computer program instructions may be loaded on a processor of a general purpose computer, special purpose computer or programmable data processing equipment. When the loaded program instructions are executed by the processor, they create a means for carrying out functions described in the flowchart. As the computer program instructions may be stored in a computer readable memory that is usable in a specialized computer or a programmable data processing equipment, it is also possible to create articles of manufacture that carry out functions described in the flowchart. As the computer program instructions may be loaded on a computer or a programmable data processing equipment, when executed as processes, they may carry out steps of functions described in the flowchart.

In addition, a block of a flowchart may correspond to a module, a segment or a code containing one or more executable instructions implementing one or more logical functions, or to a part thereof. In some cases, functions described by blocks may be executed in an order different from the listed order. For example, two blocks listed in sequence may be executed at the same time or executed in reverse order according to their corresponding functions. In the description, the word "unit", "module" or the like may refer to a software component or hardware component such as an FPGA (field programmable gate array) or ASIC (application specific integrated circuit) capable of carrying out a function or an operation. However, "unit" or the like is not limited to hardware or software. A unit or the like may be configured so as to reside in an addressable storage medium or to drive one or more processors. Units or the like may refer to software components, object-oriented software components, class components, task components, processes, functions, attributes, procedures, subroutines, program code segments, drivers, firmware, microcode, circuits, data, databases, data structures, tables, arrays or variables. A function provided by a component and unit may be a combination of smaller components and units, and may be combined with others to compose large components and units. Components and units may be configured to drive a device or one or more processors in a secure multimedia card. Also, in an embodiment, a unit or the like may include one or more processors.

For convenience of explanation, the disclosure uses terms and names defined in the 3GPP LTE (3rd Generation Partnership Project Long Term Evolution) standards. However, the disclosure is not limited by the above terms and names, and can be equally applied to systems conforming to other standards. In the disclosure, the term "eNB" may be used interchangeably with "gNB" for convenience of explanation. That is, a base station described as an eNB may represent a gNB.

FIG. 1A is a diagram illustrating the architecture of a long term evolution (LTE) system according to an embodiment of the disclosure.

With reference to FIG. 1A, as illustrated, the radio access network of the LTE system is composed of evolved node Bs (hereinafter, referred to as "ENBs," "node Bs," or "base stations") 1a-05, 1a-10, 1a-15 and 1a-20, a mobility management entity (MME) 1a-25, and a serving-gateway (S-GW) 1a-30. A user equipment (hereinafter, referred to as "UE" or "terminal") 1a-35 connects to an external network through the ENBs 1a-05, 1a-10, 1a-15 and 1a-20 and the S-GW 1a-30.

In FIG. 1A, the ENBs 1a-05, 1a-10, 1a-15 and 1a-20 correspond to existing node Bs of a UMTS system. The ENB is connected to the UE 1a-35 through a radio channel, and plays a more complicated role than that of the existing node B. In the LTE system, since all user traffic including real-time services such as voice over IP (VoIP) are serviced through shared channels, devices performing scheduling through collection of state information, such as a buffer state, an available transmission power state, and a channel state of each UE, are necessary, and the ENBs 1a-05, 1a-10, 1a-15 and 1a-20 correspond to such scheduling devices. In general, one ENB controls a plurality of cells. For example, to achieve a transmission speed of 100 Mbps, the LTE system uses orthogonal frequency division multiplexing (OFDM) in a bandwidth of 20 MHz as a radio access technology. Further, the LTE system adopts an adaptive modulation and coding (AMC) scheme that determines a modulation scheme and a channel coding rate to match the channel state of the UE. The S-GW 1a-30 is a device that provides a data bearer, and generates or removes a data bearer under the control of the MME 1a-25. The MME is a device that takes charge of not only mobility management of the UE but also various kinds of control functions, and is connected to a plurality of base stations.

FIG. 1B is a diagram illustrating the structure of radio protocols in a long term evolution (LTE) system according to an embodiment of the disclosure.

With reference to FIG. 1B, in a UE or an ENB, the radio protocol of the LTE system is composed of packet data convergence protocol (PDCP) 1b-05 or 1b-40, radio link control (RLC) 1b-10 or 1b-35, and medium access control (MAC) 1b-15 or 1b-30. The PDCP (packet data convergence protocol) 1b-05 or 1b-40 takes charge of IP header compression/decompression operations. The main functions of the PDCP are summarized as follows.
- Header compression and decompression (ROHC only)
- Transfer of user data
- In-sequence delivery (in-sequence delivery of upper layer PDUs at PDCP re-establishment procedure for RLC AM)
- Sequence reordering (for split bearers in DC (only support for RLC AM): PDCP PDU routing for transmission and PDCP PDU reordering for reception)
- Duplicate detection (duplicate detection of lower layer SDUs at PDCP re-establishment procedure for RLC AM)
- Retransmission (retransmission of PDCP SDUs at handover and, for split bearers in DC, of PDCP PDUs at PDCP data-recovery procedure, for RLC AM)
- Ciphering and deciphering
- Timer-based SDU discard in uplink

The radio link control (hereinafter, referred to as "RLC") 1b-10 or 1b-35 reconfigures PDCP packet data units (PDUs) to a proper size and performs an ARQ operation. The main functions of the RLC are summarized as follows.
- Transfer of upper layer PDUs
- ARQ (error correction through ARQ (only for AM data transfer))
- Concatenation, segmentation and reassembly of RLC SDUs (only for UM and AM data transfer)
- Re-segmentation of RLC data PDUs (only for AM data transfer)
- Sequence reordering (reordering of RLC data PDUs (only for UM and AM data transfer)
- Duplicate detection (only for UM and AM data transfer)
- Error detection (protocol error detection (only for AM data transfer))
- RLC SDU discard (only for UM and AM data transfer)
- RLC re-establishment

The MAC 1b-15 or 1b-30 is connected to several RLC layer entities configured in one UE, and performs multiplexing/demultiplexing of RLC PDUs into/from MAC PDUs. The main functions of the MAC are summarized as follows.
- Mapping (mapping between logical channels and transport channels)
- Multiplexing and demultiplexing (multiplexing/demultiplexing of MAC SDUs belonging to one or different logical channels into/from transport blocks (TB) delivered to/from the physical layer on transport channels)
- Scheduling information reporting
- HARQ (error correction through HARQ)
- Priority handling between logical channels of one UE
- Priority handling between UEs by means of dynamic scheduling
- MBMS service identification
- Transport format selection
- Padding

The physical layer 1b-20 or 1b-25 composes OFDM symbols from higher layer data through channel coding and modulation and transmits them through a radio channel, or recovers OFDM symbols received over a radio channel through demodulation and channel decoding and forwards them to the higher layer.

FIG. 1C is a diagram illustrating the architecture of a next-generation mobile communication system according to an embodiment of the disclosure.

With reference to FIG. 1C, as illustrated, the radio access network of a next-generation mobile communication system (hereinafter, referred to as "NR" or "2g") is composed of a new radio node B (hereinafter, referred to as "NR gNB" or "NR base station") 1c-10 and a new radio core network (NR CN) 1c-05. A user equipment (hereinafter, referred to as "NR UE" or "terminal") 1c-15 connects to an external network through the NR gNB 1c-10 and the NR CN 1c-05.

In FIG. 1C, the NR gNB 1c-10 corresponds to an evolved node B (ENB) of the existing LTE system. The NR gNB is connected to the NR UE 1c-15 through a radio channel, and it can provide a more superior service than that of the existing node B. Since all user traffic are serviced through shared channels in the next-generation mobile communication system, a device that performs scheduling through collection of status information, such as a buffer state, an available transmission power state, and a channel state of each UE, is necessary, and the NR gNB 1c-10 takes charge of this. One NR gNB generally controls a plurality of cells. To implement ultra-high-speed data transmission compared with the existing LTE, a bandwidth beyond the existing maximum bandwidth may be utilized in the NR technology, and a beamforming technology may be added to orthogonal frequency division multiplexing (OFDM) being used as a radio access technology in NR. Further, an adaptive modulation and coding (AMC) scheme determining a modulation scheme and a channel coding rate to match the channel state of the UE is adopted. The NR CN 1c-05 performs functions such as mobility support, bearer configuration, and QoS configuration. The NR CN is a device taking charge of not only UE mobility management but also various kinds of control functions, and is connected to a plurality of base stations. Further, the next-generation mobile communication system may also interwork with the existing LTE system, and the NR CN is connected to an MME 1c-25 through a network interface. The MME is connected to an eNB 1c-30 being an existing base station.

FIG. 1D is a diagram illustrating the structure of radio protocols in a next-generation mobile communication system according to an embodiment of the disclosure.

With reference to FIG. 1D, in a UE or an NR gNB, the radio protocol of the next-generation mobile communication system is composed of NR service data adaption protocol (SDAP) 1d-01 or 1d-45, NR packet data convergence protocol (PDCP) 1d-05 or 1d-40, NR radio link control (RLC) 1d-10 or 1d-35, and NR medium access control (MAC) 1d-15 or 1d-30.

Main functions of the NR SDAP 1d-01 or 1d-45 may include some of the following functions.
- Transfer of user plane data
- Mapping between a QoS flow and a DRB for both DL and UL
- Marking QoS flow ID in both DL and UL packets
- Reflective QoS flow to DRB mapping for UL SDAP PDUs

With respect to the SDAP entity, the UE may be configured with, through a RRC message, whether to use a header of the SDAP entity or whether to use a function of the SDAP entity for each PDCP entity, bearer, or logical channel. If a SDAP header is configured, a NAS reflective QoS 1-bit indication and AS reflective QoS 1-bit indication of the SDAP header may be used to instruct the UE to update or reconfigure the mapping information between QoS flows and data bearers for the uplink and downlink. The SDAP header may include QoS flow ID information indicating the QoS. The QoS information may be used as data processing priority and scheduling information for supporting smooth services.

Main functions of the NR PDCP 1d-05 or 1d-40 may include some of the following functions.

Header compression and decompression (ROHC only)
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above description, the reordering function of the NR PDCP entity may mean reordering of PDCP PDUs received from a lower layer in order based on the PDCP sequence number (SN), and it may include delivering data to an upper layer in reordered sequence, may include directly delivering data without considering the order, may include recording lost PDCP PDUs through reordering, may include reporting the status of lost PDCP PDUs to the transmitting side, or may include requesting retransmission of the lost PDCP PDUs.

Main functions of the NR RLC 1d-10 or 1d-35 may include some of the following functions.
- Data transfer (transfer of upper layer PDUs)
- In-sequence delivery (in-sequence delivery of upper layer PDUs)
- Out-of-sequence delivery (out-of-sequence delivery of upper layer PDUs)
- Error correction through ARQ
- Concatenation, segmentation and reassembly of RLC SDUs
- Re-segmentation of RLC data PDUs
- Reordering of RLC data PDUs
- Duplicate detection
   - Protocol error detection
   - RLC SDU discard
   - RLC re-establishment

In the above description, in-sequence delivery of the NR RLC entity may mean in-sequence delivery of RLC SDUs received from a lower layer to an upper layer. In-sequence delivery of the NR RLC entity may include reassembly and delivery of RLC SDUs when several RLC SDUs belonging to one original RLC SDU are received after segmentation, may include reordering of received RLC PDUs based on the RLC sequence number (SN) or the PDCP SN, may include recording lost RLC PDUs through reordering, may include reporting the status of the lost RLC PDUs to the transmitting side, may include requesting retransmission of the lost RLC PDUs, may include, if there is a lost RLC SDU, in-sequence delivery of only RLC SDUs before the lost RLC SDU to an upper layer, may include, although there is a lost RLC SDU if a specified timer has expired, in-sequence delivery of all the RLC SDUs received before the starting of the timer to an upper layer, or may include, although there is a lost RLC SDU if a specified timer has expired, in-sequence delivery of all the RLC SDUs received up to now to an upper layer. The NR RLC entity may process RLC PDUs in the order of reception (in order of arrival regardless of the order of the sequence number), and transfer them to the NR PDCP entity in an out-of-sequence delivery manner. Or, in the case of receiving a segment, the NR RLC entity may reconstruct one whole RLC PDU from segments stored in the buffer or received later, and transfer it to the NR PDCP entity. The NR RLC layer may not include a concatenation function, which may be performed by the NR MAC layer or may be replaced with a multiplexing function of the NR MAC layer.

In the above description, out-of-sequence delivery of the NR RLC entity may mean a function of transferring RLC SDUs received from a lower layer directly to a higher layer regardless of their order, and may include, if several RLC SDUs belonging to one original RLC SDU are received after segmentation, reassembly and delivery of the RLC SDUs, and may include storing the RLC SNs or PDCP SNs of received RLC PDUs and ordering them to record lost RLC PDUs.

The NR MAC 1d-15 or 1d-30 may be connected to several NR RLC entities configured in one UE, and main functions of the NR MAC may include some of the following functions.
- Mapping between logical channels and transport channels
- Multiplexing and demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY 1d-20 or 1d-25 may compose OFDM symbols from higher layer data through channel coding and modulation and transmit them through a radio channel, or may demodulate and channel-decode OFDM symbols received through a radio channel and forward the result to a higher layer.

FIG. 1E is a diagram illustrating a procedure in which a UE in RRC idle mode (RRC_IDLE) or RRC inactive state (RRC_INACTIVE) reselects a cell that periodically transmits essential system information according to an embodiment of the disclosure.

In an embodiment of the disclosure, the cell is characterized by periodically transmitting essential system information, which refers to Master Information Block (MIB) and System Information Block 1 (SIB1). The essential system information includes configuration information required for the UE to select or camp on a cell.

The cell reselection evaluation process may mean a procedure for the UE in RRC idle mode (RRC_IDLE) or RRC inactive state (RRC_INACTIVE) to determine whether to maintain the current serving cell or perform cell reselection to a neighbor cell when the quality of service of the currently camped serving cell becomes lower than the quality of service of the neighbor cell owing to a specific reason or movement.

In the case of handover, the decision to perform handover operation is made by the network (AMF or source gNB). Meanwhile, in the case of cell reselection, the UE in RRC idle mode or RRC inactive state may determine whether to perform cell reselection by itself based on cell measurement values. The cell that the UE reselects may mean a cell using the same NR frequency as the currently camped serving cell (NR intra-frequency or serving NR frequency), a cell using a different NR frequency from the serving cell (NR inter-frequency), or a cell on a frequency utilizing a different radio access technology (RAT) (inter-RAT frequency).

With reference to FIG. 1E, at step 1e-03, the UE 1e-01 may establish an RRC connection to the NR cell 1e-02 and be in RRC connected mode (RRC_CONNECTED). (RRC_CONNECTED)

At step 1e-04, the NR cell (1e-02) may transmit an RRC release message (RRCRelease) to release the RRC connection to the UE 1e-01 in RRC connected mode. (RRCRelease)

At step 1e-05, if the above message includes suspend configuration information (suspendConfig), the UE may transition to RRC inactive mode (RRC_INACTIVE). If the above message does not include suspend configuration information, the UE may transition to RRC idle mode (RRC_IDLE). (RRC_IDLE or RRC_INACTIVE).

The above message may include cellReselectionPriorities for the UE to perform cell reselection. cellReselectionPriorities may contain (or include) at least one value among freqPriorityListEUTRA, freqPriorityListNR, and t320. If a t320 value is included, the UE may start the T320 timer set to the corresponding value. More specifically, the configuration information included in the above RRCRelease message may be as shown in Table 1 below.

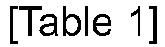

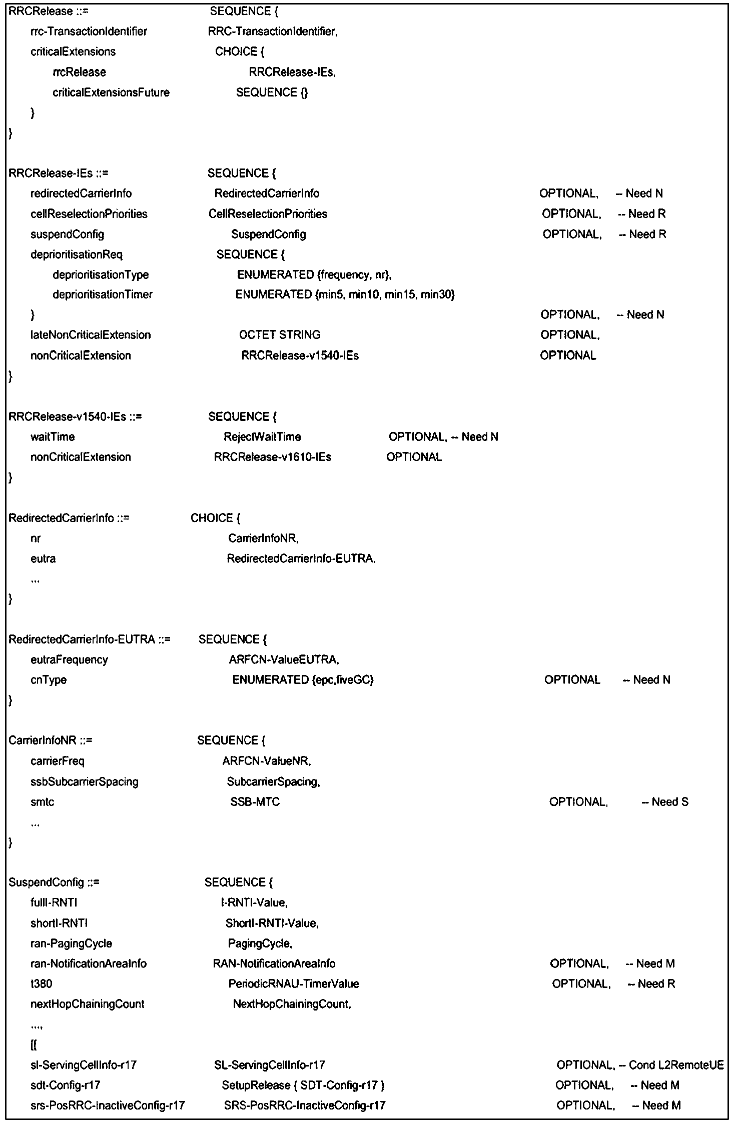

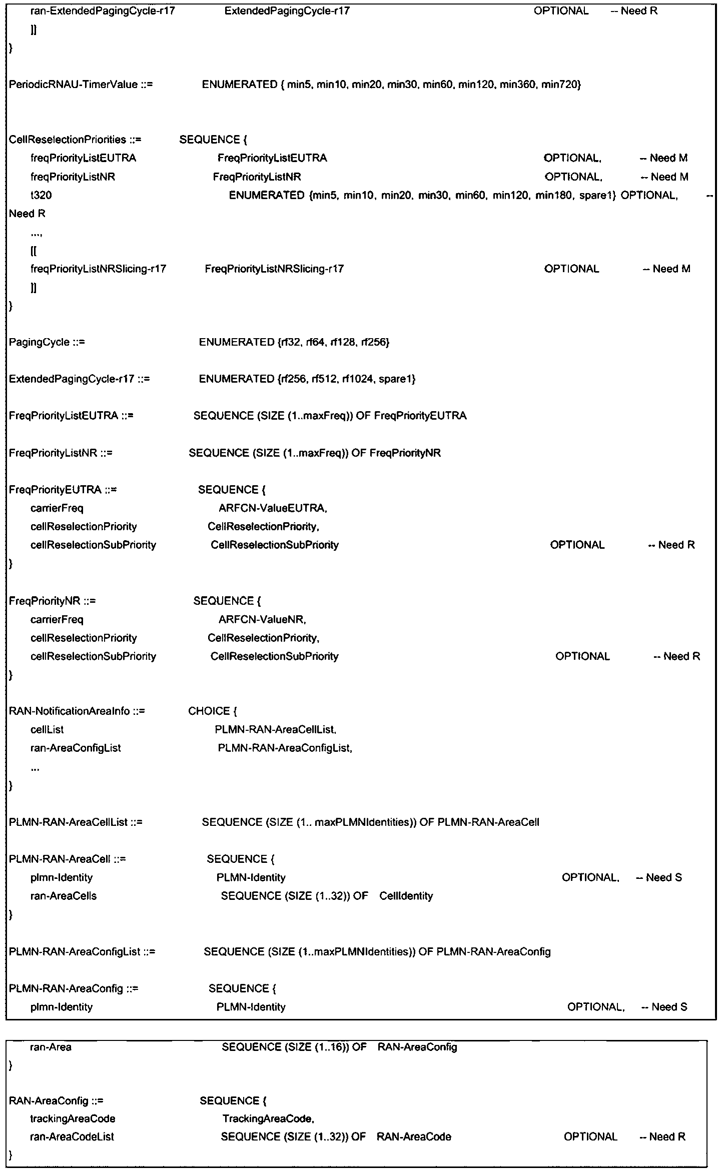

At step 1e-13, the UE 1e-01 in RRC idle mode or RRC inactive state may obtain essential system information from the NR cell 1e-02. In this disclosure, the essential system information may refer to Master Information Block (MIB) and System Information Block 1 (SIB1).

At step 1e-15, the UE 1e-01 in RRC idle mode or RRC inactive state may perform a cell selection procedure based on the essential system information obtained at step 1e-13. (Camp on a suitable NR cell by performing cell reselection)

That is, the UE may find a suitable NR cell belonging to the selected PLMN (public land mobile network) or SNPN (standalone nonpublic network), and camp on to that cell. The cell on which the UE has camped may be referred to as a serving cell. In this disclosure, based on the 3GPP standard document "38.304: User Equipment (UE) procedures in Idle mode and RRC Inactive state," a cell may be defined to be a suitable cell if the conditions in Table 2 below are satisfied.

**[Table 2]**

| |
|---|
| **suitable cell:** |
| For UE not operating in SNPN Access Mode, a cell is considered as suitable if the following conditions are fulfilled: |
| -The cell is part of either the selected PLMN or the registered PLMN or PLMN of the Equivalent PLMN list, and for that PLMN either: |
| -The PLMN-ID of that PLMN is broadcast by the cell with no associated CAG-IDs and CAG-only indication in the UE for that PLMN (TS 23.501 [10]) is absent or false; |
| -Allowed CAG list in the UE for that PLMN (TS 23.501 [10]) includes a CAG-ID broadcast by the cell for that PLMN; |
| -The cell selection criteria are fulfilled, see clause 5.2.3.2. |
| According to the latest information provided by NAS: |
| -The cell is not barred, see clause 5.3.1; |
| -The cell is part of at least one TA that is not part of the list of "Forbidden Tracking Areas for Roaming" (TS 22.011 [18]), which belongs to a PLMN that fulfils the first bullet above. |
| For UE operating in SNPN Access Mode, a cell is considered as suitable if the following conditions are fulfilled: |
| -The cell is part of either the selected SNPN or the registered SNPN of the UE; |
| -The cell selection criteria are fulfilled, see clause 5.2.3.2; |
| According to the latest information provided by NAS: |
| -The cell is not barred, see clause 5.3.1; |
| -The cell is part of at least one TA that is not part of the list of "Forbidden Tracking Areas for Roaming" which belongs to either the selected SNPN or the registered SNPN of the UE. |

For reference, the UE 1e-01 may determine that the cell selection criteria are fulfilled if Equation 1 below is satisfied. [Equation 1] $Srxlev > 0 AND Squal > 0$ where $Srxlev = {Q}_{rxlevmeas} - \left({Q}_{rxlevmin}+{Q}_{rxlevminoffset}\right) - {P}_{compensation} - {Qoffset}_{temp} .$
$Squal = {Q}_{qualmeas} - \left({Q}_{qualmin}+{Q}_{qualminoffset}\right) - {Qoffset}_{temp} .$

| | |
|---|---|
| Srxlev | Cell selection RX level value (dB) |
| Squal | Cell selection quality value (dB) |
| Qoffsetₜₑₘₚ | Offset temporarily applied to a cell as specified in TS 38.331 [3] (dB) |
| Qᵣₓₗₑᵥₘₑₐₛ | Measured cell RX level value (RSRP) |
| Q_{qualmeas} | Measured cell quality value (RSRQ) |
| Qᵣₓₗₑᵥₘᵢₙ | Minimum required RX level in the cell (dBm). If the UE supports SUL frequency for this cell, Qᵣₓₗₑᵥₘᵢₙ is obtained from *q-RxLevMinSUL,* if present, in *SIB1, SIB2* and *SIB4,* additionally, if Q_{rxlevminoffsetcellSUL} is present in *SIB3* and *SIB4* for the concerned cell, this cell specific offset is added to the corresponding Qrxlevmin to achieve the required minimum RX level in the concerned cell; |
| | else Qᵣₓₗₑᵥₘᵢₙ is obtained from *q-RxLevMin* in *SIB1, SIB2* and *SIB4,* additionally, if Q_{rxlevminoffsetcell} is present in SIB3 and *SIB4* for the concerned cell, this cell specific offset is added to the corresponding Qrxlevmin to achieve the required minimum RX level in the concerned cell. |
| Q_{qualmin} | Minimum required quality level in the cell (dB). Additionally, if Q_{qualminoffsetcell} is signalled for the concerned cell, this cell specific offset is added to achieve the required minimum quality level in the concerned cell. |
| Q_{rxlevminoffset} | Offset to the signalled Qᵣₓₗₑᵥₘᵢₙ taken into account in the Srxlev evaluation as a result of a periodic search for a higher priority PLMN while camped normally in a VPLMN, as specified in TS 23.122 [9]. |
| Q_{qualminoffset} | Offset to the signalled Q_{qualmin} taken into account in the Squal evaluation as a result of a periodic search for a higher priority PLMN while camped normally in a VPLMN, as specified in TS 23.122 [9]. |
| P_{compensation} | For FR1, if the UE supports the *additionalPmax* in the *NR-NS-PmaxList,* if present, in *SIB1, SIB2* and *SIB4:* |
| | *max(P_{EMAX1} -P_{PowerClass}, 0) - (min(P_{EMAX2}, P_{PowerClass}) - min(P_{EMAX1}, P_{PowerClass})) (dB);* |
| | *else:* |
| | *max(P_{EMAX1} -P_{PowerClass}, 0) (dB)* |
| | For FR2, P_{compensation} is set to 0. |
| | For IAB-MT, P_{compensation} is set to 0. |
| P_{EMAX1}, P_{EMAX2} | Maximum TX power level of a UE may use when transmitting on the uplink in the cell (dBm) defined as P_{EMAX} in TS 38.101 [15]. If UE supports SUL frequency for this cell, P_{EMAX1} and P_{EMAX2} are obtained from the *p-Max* for SUL in *SIB1* and *NR-NS-PmaxList* for SUL respectively in *SIB1, SIB2* and *SIB4* as specified in TS 38.331 [3], else P_{EMAX1} and P_{EMAX2} are obtained from the *p-Max* and *NR-NS-PmaxList* respectively in *SIB1, SIB2* and *SIB4* for normal UL as specified in TS 38.331 [3]. |
| P_{PowerClass} | Maximum RF output power of the UE (dBm) according to the UE power class as defined in TS 38.101-1 [15]. |

At step 1e-20, the UE 1e-01 in RRC idle mode or RRC inactive state may obtain system information including cell reselection information from the serving cell 1e-02 to perform a cell reselection evaluation process. The system information may include SIB2, SIB3, SIB4, and SIB5.

SIB2 may include information and/or parameters that are commonly applied when the UE reselects NR intra-frequency, NR inter-frequency, and inter-RAT frequency cells, and NR intra-frequency cell reselection information excluding information related to NR intra-frequency neighbor cells. For example, SIB2 may include cell reselection priority setting information for the serving NR frequency (the frequency to which the currently camped cell belongs). The cell reselection priority setting information may refer to cellReselectionPriority and cellReselectionSubPriority. Specifically, cellReselectionPriority may have an integer value, and cellReselectionSubPriority may have a decimal value. For example, cellReselectionPriority may include an integer value from 0 to 7, and cellReselectionSubPriority may include a decimal value from among 0.2, 0.4, 0.6, and 0.8.

If both cellReselectionPriority and cellReselectionSubPriority are signaled, the UE may derive a cell reselection priority value by adding these two values. For reference, a higher cell reselection priority value indicates a higher priority. More specifically, the cell reselection setting information broadcast via SIB2 may be as shown in Table 3 below.

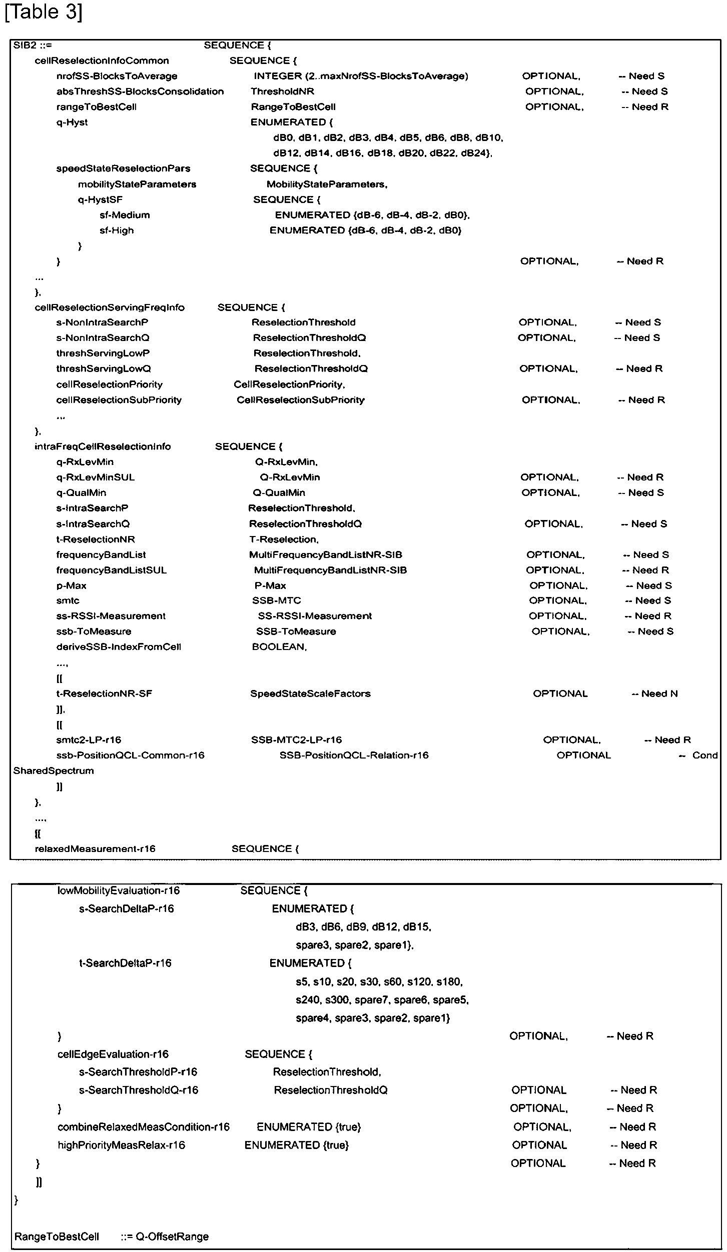

SIB3 may include neighbor cell information and/or parameters for the UE in RRC idle mode or RRC inactive state to reselect an NR intra-frequency cell. For example, SIB3 may broadcast an NR intra-frequency neighbor cell list (intraFreqNeighCellList) for NR intra-frequency cell reselection, a list of cells where NR intra-frequency cell reselection is allowed (intraFreqAllowedCellList), and a list of cells where NR intra-frequency cell reselection is not allowed (intraFreqExcludedCellList). More specifically, the information as shown in Table 4 below may be broadcast via SIB3.

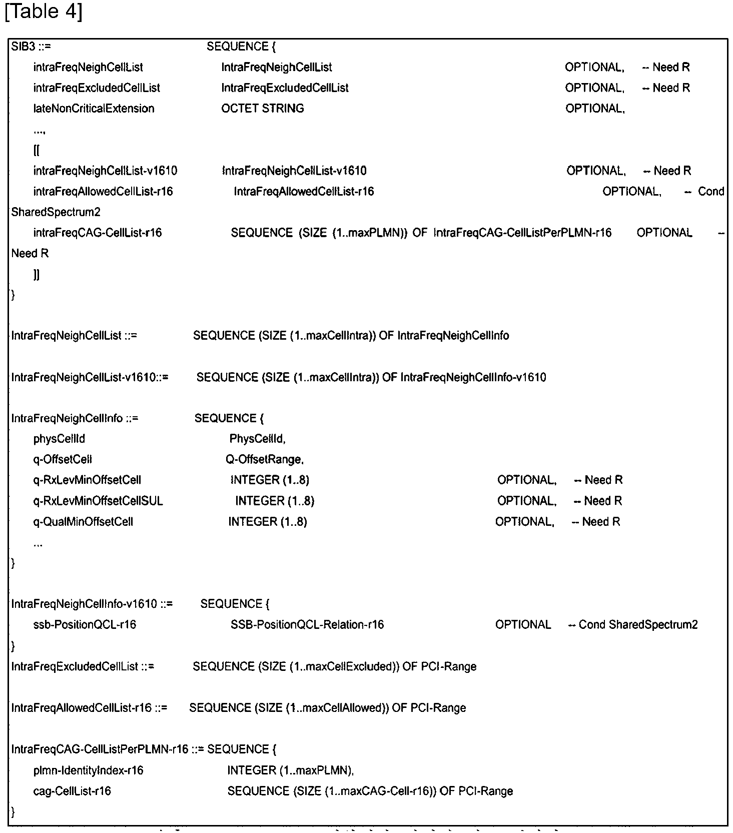

SIB4 may include information and/or parameters for the UE in RRC idle mode or RRC inactive state to reselect an NR inter-frequency cell. For example, SIB4 may broadcast one or multiple NR inter-frequencies, and may broadcast one cell reselection priority setting information per NR inter-frequency. The cell reselection priority setting information per NR inter-frequency refers to the contents described above (e.g., cellReselectionPriority and/or cellReselectionSubPriority mapped to each NR inter-frequency), but it is characterized by the fact that one cell reselection priority setting information for each inter-frequency is broadcast optionally. Specifically, the information as shown in Table 5 below may be broadcast via SIB4.

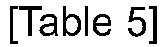

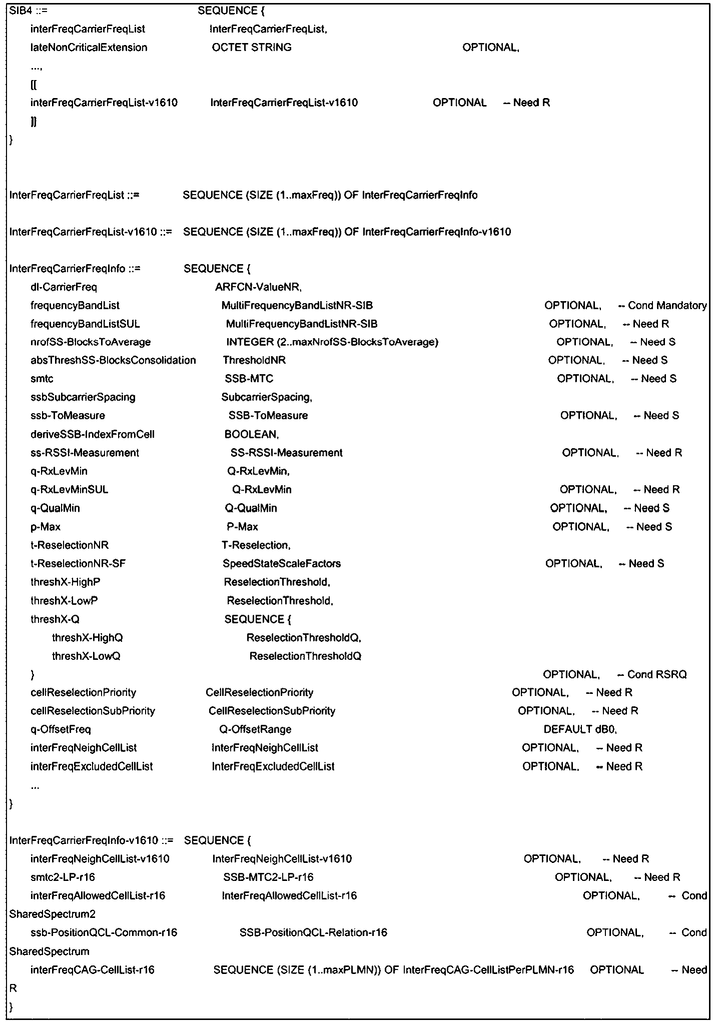

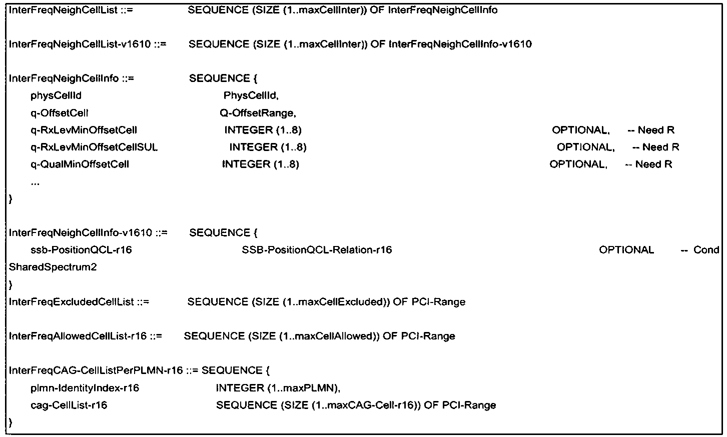

SIB5 may include information and/or parameters for the UE in RRC idle mode or RRC inactive state to reselect an inter-RAT frequency cell. For example, SIB5 may broadcast one or multiple EUTRA frequencies, and may broadcast one cell reselection priority setting information per EUTRA frequency. The cell reselection priority setting information per EUTRA frequency refers to the contents described above (e.g., cellReselectionPriority and/or cellReselectionSubPriority mapped to each EUTRA frequency), but it is characterized by the fact that one cell reselection priority setting information for each EUTRA frequency is broadcast optionally. Specifically, the information as shown in Table 6 below may be broadcast via SIB5.

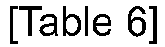

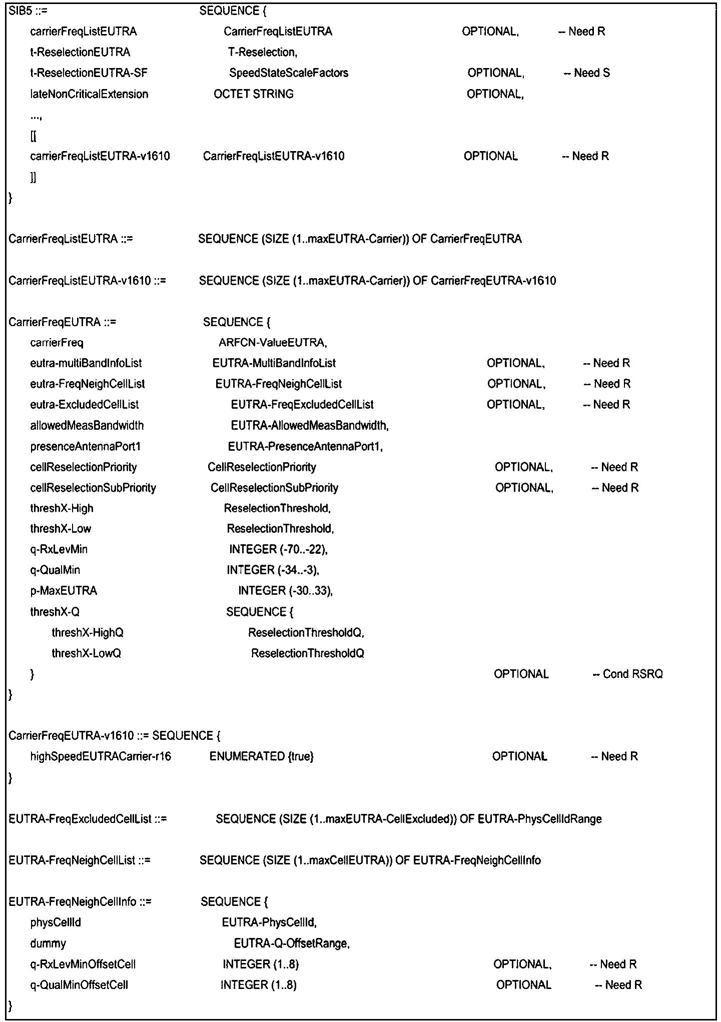

In this disclosure, it is proposed that the system information additionally signals a list of cells transmitting SIB1 on demand per frequency. More specifically, a per-frequency cell list may be broadcast in the system information, which may refer to a list of cells transmitting SIB1 on demand. For example, SIB3 may include a list of cells that transmit SIB1 on demand at the frequency to which the current serving cell belongs. SIB4 may include a list of cells that transmit SIB1 on demand for each neighboring NR frequency. Certainly, the above-described contents may also be signaled through new system information. The UE 1e-01 having received the above cell list may exclude the corresponding cells from cell reselection candidates in the cell reselection evaluation process to be described later.

A UE in RRC idle mode or RRC inactive state may perform a cell reselection evaluation process. The cell reselection evaluation process may refer to a series of processes involving handling reselection priorities, performing frequency measurements by applying measurement rules for cell reselection, and performing cell reselection by evaluating the cell reselection criteria.

At step 1e-25, the UE 1e-01 in RRC idle mode or RRC inactive state may determine reselection priorities based on the RRC release message received at step 1e-04 or system information received at step 1e-20. (Handle reselection priorities)

If the RRC release message received at step 1e-04 includes cellReselectionPriorities but there is no t320 timer value in cellReselectionPriorities, or if a t320 timer value is set and the T320 timer is running, the UE 1e-01 may determine the reselection priorities according to the RRC release message. That is, if celllReselectionPriorities included in the RRC release message can be applied, the UE 1e-01 may determine the reselection priorities according to the RRC release message.

If the RRC release message does not include cellReselectionPriorities or if cellReselectionPriorities are released, the UE 1e-01 may determine the reselection priorities based on the system information received at step 1e-20.

The UE 1e-01 according to an embodiment of the disclosure may determine, based on the cell reselection priority value mapped to the NR frequency to which the currently camped serving cell belongs, whether the cell reselection priority for each NR inter-frequency or inter-RAT frequency is equal to, higher than, or lower than the cell reselection priority of the NR frequency to which the serving cell belongs. For example, in the system information obtained at step 1e-20, the cell reselection priority value mapped to the NR frequency to which the currently camped serving cell belongs may be 3, the cell reselection priority value of NR inter-frequency 1 may be 2, the cell reselection priority value of NR inter-frequency 2 may be 3, the cell reselection priority value of NR inter-frequency 3 may be 4, and the cell reselection priority value of EUTRA frequency 1 may be 2. In this case, the UE may determine NR inter-frequency 1 and EUTRA frequency 1 as having a lower reselection priority, determine NR inter-frequency 2 as having an equal reselection priority, and determine NR inter-frequency 3 as having a higher reselection priority.

At step 1e-30, the UE 1e-01 in RRC idle mode or RRC inactive state may perform frequency measurement for cell reselection. (Perform measurement by using measurement rules for cell reselection)

Here, to minimize battery consumption, the UE may perform frequency measurement according to the cell reselection priorities determined at step 1e-25 by using the following measurement rules.
- The UE may not perform NR intra-frequency measurement if condition 1 below is satisfied. Otherwise (e.g., if condition 1 is not satisfied), the UE performs NR intra-frequency measurement.
   ▪ Condition 1: The serving cell's reception level (Srxlev) is greater than threshold SIntraSearchP and the serving cell's reception quality (Squal) is greater than threshold SIntraSearchQ (Serving cell fulfils Srxlev > SIntraSearchP and Squal > SIntraSearchQ).
- The UE may perform measurements for NR inter-frequency or inter-RAT frequency having a higher reselection priority than that of the NR frequency of the current serving cell according to specification 3GPP TS 38.133.
- The UE may not perform measurements for an NR inter-frequency having a reselection priority lower than or equal to that of the NR frequency of the current serving cell and an inter-RAT frequency having a reselection priority lower than that of the NR frequency of the current serving cell if condition 2 below is satisfied. Otherwise (e.g., if condition 2 below is not satisfied), the UE performs measurements on cells in an NR inter-frequency having a reselection priority lower than or equal to that of the NR frequency, or cells in an inter-RAT frequency having a reselection priority lower than that of the NR frequency.
   ▪ Condition 2: the serving cell's reception level (Srxlev) is greater than threshold SnonIntraSearchP and the serving cell's reception quality (Squal) is greater than threshold SnonIntraSearchQ (Serving cell fulfils Srxlev > SnonIntraSearchP and Squal > SnonIntraSearchQ).

For reference, the aforementioned threshold values (SintraSearchP, SintraSearchQ, SnonIntraSearchP, SnonIntraSearchQ) may be broadcast via the system information obtained at step 1e-20.

At step 1e-35, the UE in RRC idle mode or RRC inactive state may determine to reselect a cell that satisfies the cell reselection criteria based on the measurements performed at step 1e-30. (Evaluate cell reselection criteria)

Different cell reselection criteria may be applied depending on the cell reselection priorities. If multiple cells satisfying the cell reselection criteria have different cell reselection priorities, reselecting a frequency/RAT cell with a higher priority takes precedence over reselecting a frequency/RAT cell with a lower priority (Cell reselection to a higher priority RAT/frequency shall take precedence over a lower priority RAT/frequency if multiple cells of different priorities fulfil the cell reselection criteria).

More specifically, the UE's operation regarding the reselection criteria for inter-frequency/inter-RAT cells with a higher priority than that of the frequency of the current serving cell is as follows.
- First operation:
   ▪ If SIB2 includes a threshold for threshServingLowQ and 1 second has passed since the UE camped on to the current serving cell, and the signal quality (Squal) of the inter-frequency/inter-RAT cell is greater than threshold ThreshX,HighQ during specific time interval TreselectionRAT (Squal > ThreshX,HighQ during time interval TreselectionRAT), the UE may perform reselection to the corresponding inter-frequency/inter-RAT cell.
- Second operation:
   ▪ If the UE fails to perform the first operation, it may perform the second operation.
   ▪ If 1 second has passed since the UE has camped on to the current serving cell and the reception level (Srxlev) of the inter-frequency/inter-RAT cell is greater than threshold ThreshX,HighP during specific time interval TreselectionRAT (Srxlev > ThreshX,HighP during time interval TreselectionRAT), the UE may perform reselection to the corresponding inter-frequency/inter-RAT cell.

Here, the UE may perform the first or second operation for the inter-frequency cell based on information contained in SIB4 broadcast from the serving cell regarding signal quality (Squal), reception level (Srxlev), threshold values (ThrehX,HighQ, ThreshX,HighP), and TreselectionRAT values, and may perform the first or second operation for the inter-RAT cell based on information contained in SIB5 broadcast from the serving cell regarding signal quality (Squal), reception level (Srxlev), threshold values (ThreshX,HighQ, ThreshX,HighP), and TreselectionRAT values. For example, SIB4 includes a Qqualmin value or Qrxlevmin value, and the signal quality (Squal) or reception level (Srxlev) of the inter-frequency cell is derived based on this. If there are multiple cells in the NR frequency having a high cell reselection priority, the UE may perform reselection to the highest ranked cell from among the cells that satisfy the reselection criteria for intra-frequency/inter-frequency cells that have the same priority as the frequency of the current serving cell to be described later.

In addition, the UE's operation regarding the reselection criteria for intra-frequency/inter-frequency cells having the same priority as the frequency of the current serving cell is as follows.
- Third operation:
   ▪ If the signal quality (Squal) and reception level (Srxlev) of an intra-frequency/inter-frequency cell are greater than 0, the cell-specific rank is derived based on the measured value (RSRP) (The UE shall perform ranking of all cells that fulfills the cell selection criterion S). The ranks of the serving cell and neighbor cell are respectively calculated using Equation 2 below.

      [Equation 2] $\begin{matrix}{R}_{s} = {Q}_{meas , s} + {Q}_{hyst} - {Qoffset}_{temp} \\ {R}_{n} = {Q}_{meas , n} - Qoffset - {Qoffset}_{temp}\end{matrix}$
   • Here, Q_{meas,s} is the RSRP measurement of the serving cell, Q_{meas,n} is the RSRP measurement of the neighbor cell, Q_{hyst} is the hysteresis value of the serving cell, and Qoffset is the offset between the serving cell and the neighbor cell. SIB2 includes the Q_{hyst} value, which is used commonly for the reselection of intra-frequency and inter-frequency cells. In the case of intra-frequency cell reselection, Qoffset is signaled per cell, is applied only to the indicated cell, and is included in SIB3. In the case of inter-frequency cell reselection, Qoffset is signaled per cell, is applied only to the indicated cell, and is included in SIB4. For a case where the rank of the neighbor cell obtained from Equation 2 is greater than the rank of the serving cell (Rn > Rs), reselection is performed to the best cell among the neighbor cells.
   • Here, Qoffsetₜₑₘₚ is an offset temporarily applied to the cell, may refer to connEstFailOffset included in ConnEstFailureControld broadcast via SIB1, and may be applied in the event of an RRC connection failure. The RRC connection failure may include the case where the T300 timer expires.

In addition, the UE's operation regarding the reselection criteria for inter-frequency/inter-RAT cells with a lower priority than that of the frequency of the current serving cell is as follows.
- Fourth operation:
   ▪ When SIB2 includes a threshold for threshServingLowQ, and 1 second has passed since the UE camped on to the current serving cell, if the signal quality (Squal) of the current serving cell is lower than the threshold ThreshServing, LowQ (Squal < ThreshServing,LowQ) and the signal quality (Squal) of the inter-frequency/inter-RAT cell is higher than threshold ThreshX,LowQ during specific time interval TreselectionRAT (Squal > ThreshX,LowQ during time interval TreselectionRAT), the UE may perform reselection to the corresponding inter-frequency/inter-RAT cell.
- Fifth operation:
   ▪ If the UE fails to perform the fourth operation, it may perform the fifth operation.
   ▪ When 1 second has passed since the UE camped on to the current serving cell, if the reception level (Srxlev) of the current serving cell is lower than threshold ThreshServing,LowP (Srxlev < ThreshServing,LowP), and the reception level (Srxlev) of the inter-frequency/inter-RAT cell is higher than threshold ThreshX,LowQ during specific time interval TreselectionRAT (Srxlev > ThreshX,LowP during time interval TreselectionRAT), the UE may perform reselection to the corresponding inter-frequency/inter-RAT cell.

Here, for the inter-frequency cell, the fourth or fifth operation of the UE may be carried out based on the threshold values (e.g., ThreshServing,LowQ, ThreshServing,LowP) included in SIB2 broadcast from the serving cell, and the signal quality (Squal), reception level (Srxlev), threshold values (ThrehX,LowQ, ThreshX,LowP), and TreselectionRAT of the inter-frequency cell included in SIB4 broadcast from the serving cell.

For the inter-RAT cell, the fourth or fifth operation of the UE can be carried out based on the threshold values (e.g., ThreshServing,LowQ, ThreshServing,LowP) included in SIB2 broadcast from the serving cell, and the signal quality (Squal), reception level (Srxlev), threshold values (ThreshX,LowQ, ThreshX,LowP), and TreselectionRAT of the inter-RAT cell included in SIB5 broadcast from the serving cell. For example, SIB4 includes Qqualmin or Qrxlevmin values, and the UE may derive the signal quality (Squal) or reception level (Srxlev) of the inter-frequency cell based on this. If there are multiple cells in the NR frequency having a high cell reselection priority, the UE may perform reselection to the highest ranked cell from among the cells that satisfy the reselection criteria for intra-frequency/inter-frequency cells that have the same priority as the frequency of the current serving cell.

At step 1e-40, before finally reselecting a candidate target cell, the UE 1e-01 in RRC idle mode or RRC inactive state may receive system information (e.g., MIB or SIB1) broadcast from the candidate target cell, and based on the received system information, may determine whether the reception level (Srxlev) and reception quality (Squal) of the candidate target cell satisfy the cell selection criterion referred to as the S-criterion (Equation 1) (Srxlev > 0 AND Squal > 0). (Before reselecting a candidate target cell, the UE reads system information from that cell and performs a final suitability check.)

The UE may reselect the candidate target cell if Equation 1 is satisfied and the candidate target cell is suitable. (If S-criterion is satisfied, reselect the concerned target cell)

FIG. 1F is a diagram illustrating a procedure in which a UE in RRC idle mode (RRC_IDLE) or RRC inactive state (RRC_INACTIVE) reselects a cell that transmits system information block 1 (SIB1) on an on-demand basis according to an embodiment of the disclosure.

A specific cell according to an embodiment of the disclosure may periodically transmit essential system information, which refers to Master Information Block (MIB) and System Information Block 1 (SIB1). The essential system information includes configuration information required for a UE to select or camp on a cell.

Additionally, a specific cell according to an embodiment of the disclosure, unlike the previously described embodiment (FIG. 1E), is characterized by periodically transmitting the MIB but being able to transmit SIB1 on demand. This is because network energy may be saved by transmitting SIB1 when there is a request from a UE. More specifically, if a UE needs to obtain SIB1 for a specific reason, the UE may request a cell that is not transmitting SIB1 to broadcast/transmit SIB1. The aforementioned specific reason may include cases for selecting and/or reselecting a cell. Then, the cell having received the above request may broadcast SIB1. With reference to FIG. 1F, at step 1f-10, the UE 1f-01 may establish an RRC connection to the NR cell 1f-05 and be in RRC connected mode (RRC_CONNECTED).

At step 1f-15, the UE 1f-01 may transmit a UE capability information message (UECapabilityInformation) to the NR cell 1f-05. This UE capability information message may include capability information indicating that the UE has the capability of transmitting a wake-up signal (hereinafter WUS), which is a signal for requesting a cell transmitting SIB1 on demand to transmit SIB1. (support of wake-up signal transmission for on-demand SIB1 delivery cell)

At step 1f-20, the NR cell 1f-05 may transmit an RRC release message (RRCRelease) to release the RRC connection to the UE 1f-01 in RRC connected mode. The information included in the above message may follow at least the aforementioned embodiments. Additionally, the above message may include at least one of the following.
- An indicator indicating whether the UE 1f-01 is allowed to transmit WUS
- Configuration information required when the UE 1f-01 transmits WUS
   ▪ The above configuration information may be set per frequency or per frequency per cell.
   ▪ The above configuration information may refer to one or more random access preambles. For example, it may refer to a preamble representing the first transmitted message (Msg1) in the random access procedure.
   ▪ The above configuration information may refer to one or more random access occasions (PRACH occasions) for preamble transmission. For example, a PRACH occasion may indicate a frequency and/or time at which a preamble is to be transmitted during a random access procedure.

At step 1f-25, the UE 1f-01 in RRC connected mode may transition to RRC idle mode (RRC_IDLE) or RRC inactive mode (RRC_INACTIVE) as in the previously described embodiment after applying the RRC release message.

More specifically, if the RRC release message includes suspend configuration information (suspendConfig), the UE may transition to RRC inactive mode (RRC_INACTIVE). On the other hand, if the above message does not include suspend configuration information, the UE may transition to RRC idle mode (RRC_IDLE). (RRC_IDLE or RRC_INACTIVE)

At step 1f-30, the UE 1f-01 in RRC idle mode or RRC inactive state may obtain MIB and SIB1 as essential system information from the NR cell 1f-05.

At step 1f-35, the UE 1f-01 may perform a cell selection procedure based on step 1f-30. This may follow the previously described embodiment.

At step 1f-40, the UE 1f-01 may obtain system information including cell reselection information from the serving cell 1f-05 to perform a cell reselection evaluation process. For example, the system information may include SIB2, SIB3, SIB4, SIB5, and new SIB. This may follow the previously described embodiment.

Additionally, the serving cell 1f-05 according to an embodiment of the disclosure may broadcast system information including WUS configuration information. The serving cell 1f-05 may transmit WUS configuration information to the UE 1f-01 by including it in at least one of system information SIB2, SIB3, SIB4, and SIB5. Alternatively, the serving cell 1f-05 may transmit WUS configuration information to the terminal 1f-01 through new system information (new SIB). More specifically, the WUS configuration information may be included in the system information by utilizing one of methods 1 and 2 below.
- Method 1: WUS configuration information per frequency (WUS configuration per frequency)
   ▪ The serving cell 1f-05 may provide WUS configuration information for the serving frequency (NR intra-frequency) via SIB2 or SIB3, and provide WUS configuration information per neighbor NR frequency (NR inter-frequency) via SIB4 to the UE 1f-01. Certainly, by defining new system information (new SIB), the serving cell 1f-05 may provide WUS configuration information per frequency to the UE 1f-01 through the new system information.
- Method 2: WUS configuration information per cell (or, per cell list) per frequency (WUS configuration per cell (or, per cell list) per frequency)
   ▪ The serving cell 1f-05 may provide WUS configuration information per cell or per cell list on the serving frequency (NR intra-frequency) via SIB2 or SIB3, and provide WUS configuration information per neighbor NR frequency (NR inter-frequency) per cell or per NR inter-frequency per cell list via SIB4 to the UE 1f-01. WUS configuration information per cell list may mean that cells composed of one or more cells share WUS configuration information. Certainly, by defining new system information (new SIB), the serving cell 1f-05 may provide WUS configuration information per cell (or per cell list) per frequency to the UE 1f-01 through the new system information.

For reference, WUS configuration information may refer to configuration information required to transmit random access parameters and random access preambles. For example, WUS configuration information may mean at least one of a random access preamble index (or index range), information on the number of SSBs per PRACH occasion, reference signal received power (RSRP) threshold (rsrp-ThresholdSSB), and PRACH occasion position information (information enabling transmission of a preamble, which is a physical signal specially designed for uplink synchronization).

At step 1f-45, the UE 1f-01 may determine reselection priorities for cell reselection. (Handle reselection priorities) The method for determining reselection priorities may follow the above-described embodiment (FIG. 1E).

At step 1f-47, the cell 1f-07 transmitting SIB1 in an on-demand manner may transmit synchronization signal SSB (Synchronization Signal/PBCH block).

At step 1f-50, the UE 1f-01 may perform frequency measurement for cell reselection. (Perform measurement by using measurement rules for cell reselection) The method of performing frequency measurement may follow the above-described embodiment (FIG. 1E).

At step 1f-55, the UE 1f-01 may determine a candidate target cell that satisfies the cell reselection criteria based on the measurement values obtained at step 1f-50. (Evaluate cell reselection criteria) This may follow the previously described embodiment (FIG. 1E).

Consequently, the UE according to the disclosure may determine the final candidate target cell to be NR cell 1f-07. That is, the NR cell 1f-07 may be the best cell or highest ranked cell for the UE 1f-01.

At step 1f-60, the UE 1f-01 may identify whether the NR cell 1f-07 transmits SIB1 on demand. (Identify whether a candidate target cell transmits SIB1 on demand)

The UE according to the disclosure may identify it by utilizing at least one of methods 1 to 3 below.
- Method 1: the UE 1f-01 may identify that the NR cell 1f-07 transmits SIB1 on demand based on the MIB transmitted by it. For example, the UE may identify that the NR cell transmits SIB1 on demand based on ssb-SubcarrierOffset or spare value in the MIB.
- Method 2: the UE may identify that the NR cell 1f-07 is transmitting SIB1 on demand through step 1f-20 or step 1f-40. For example, information indicating that this NR cell is transmitting SIB1 on demand may be included in the RRC release message or system information.
- Method 3: the UE 1f-01 may receive a specific message including WUS configuration information from the NR cell 1f-07 and determine that the corresponding cell is transmitting SIB1 on demand.

At step 1f-65, to receive SIB1 from the NR cell 1f-07, the UE 1f-01 may transmit a wake-up signal (WUS).

The UE 1f-01 may transmit a WUS based on the WUS configuration information received at step 1f-20, step 1f-40, or step 1f-60. For reference, the WUS may mean a preamble.

At step 1f-70, the NR cell 1f-07 may transmit SIB1, and the UE 1f-01 may receive SIB1. For reference, the UE 1f-01 may receive the MIB transmitted by the NR cell 1f-07 at step 1f-70 or at an earlier step. The earlier step may include step 1f-55 or step 1f-60.

At step 1f-75, based on essential system information (e.g., MIB and SIB1) received from the candidate target cell 1f-07, the UE 1f-01 may determine whether the reception level (Srxlev) and reception quality (Squal) of the candidate target cell satisfy the cell selection criterion referred to as the S-criterion (Equation 1) (Srxlev > 0 AND Squal > 0). (UE performs a final suitability check.) [Equation 1] $Srxlev > 0 AND Squal > 0$
where
$Srxlev = {Q}_{rxlevmeas} - \left({Q}_{rxlevmin}+{Q}_{rxlevminoffset}\right) - {P}_{compensation} - {Qoffset}_{temp} ,$
$Squal = {Q}_{qualmeas} - \left({Q}_{qualmin}+{Q}_{qualminoffset}\right) - {Qoffset}_{temp} .$

If the S-criterion is satisfied and the candidate target cell is suitable, the UE may reselect the candidate target cell. (If S-criterion is satisfied, re-select the concerned target cell.)

FIG. 1G is a diagram illustrating a procedure in which a UE in RRC idle mode (RRC_IDLE) or RRC inactive state (RRC_INACTIVE) reselects a cell that transmits system information block 1 (SIB1) on an on-demand basis according to an embodiment of the disclosure.

A specific cell according to an embodiment of the disclosure may periodically transmit essential system information, which refers to Master Information Block (MIB) and System Information Block 1 (SIB1). The essential system information includes configuration information required for a UE to select or camp on a cell.

Additionally, a specific cell according to an embodiment of the disclosure, unlike the previously described embodiment (FIG. 1E), is characterized by periodically transmitting the MIB but being able to transmit SIB1 on demand. This is because network energy may be saved by transmitting SIB1 when there is a request from a UE. More specifically, if a UE needs to obtain SIB1 for a specific reason, the UE may request a cell that is not transmitting SIB1 to broadcast/transmit SIB1. The aforementioned specific reason may include cases for selecting and/or reselecting a cell. Then, the cell having received the above request may broadcast SIB1.

With reference to FIG. 1G, at step 1g-10, the UE 1g-01 may establish an RRC connection to the NR cell 1g-05 and be in RRC connected mode (RRC_CONNECTED).

At step 1g-15, the UE 1g-01 may transmit a UE capability information message (UECapabilityInformation) to the NR cell 1g-05.

This UE capability information message may include capability information indicating that the UE has the capability of transmitting a wake-up signal (hereinafter WUS), which is a signal for requesting a cell transmitting SIB1 on demand to transmit SIB1. (support of wake-up signal transmission for on-demand SIB1 delivery cell)

At step 1g-20, the NR cell 1g-05 may transmit an RRC release message (RRCRelease) to release the RRC connection to the UE 1g-01 in RRC connected mode.

The information included in the above message may follow at least one of the above embodiments (FIG. 1E and FIG. 1F).

At step 1g-25, the UE 1g-01 in RRC connected mode may transition to RRC idle mode (RRC_IDLE) or RRC inactive mode (RRC_INACTIVE) as in the previously described embodiment after applying the RRC release message.

More specifically, if the RRC release message includes suspend configuration information (suspendConfig), the UE may transition to RRC inactive mode (RRC_INACTIVE). On the other hand, if the above message does not include suspend configuration information, the UE may transition to RRC idle mode (RRC_IDLE). (RRC_IDLE or RRC_INACTIVE)

At step 1g-30, the UE 1g-01 in RRC idle mode or RRC inactive state may obtain MIB and SIB1 as essential system information from the NR cell 1g-05.

At step 1g-35, the UE 1g-01 may perform a cell selection procedure based on step 1g-30. This may follow the previously described embodiment (FIG. 1E).

At step 1g-40, the UE 1g-01 may obtain system information including cell reselection information from the serving cell 1g-05 to perform a cell reselection evaluation process. For example, the system information may include SIB2, SIB3, SIB4, SIB5, and new SIB. This may follow at least one of the aforementioned embodiments (FIG. 1E and FIG. 1F).

At step 1g-45, the UE 1g-01 may determine reselection priorities for cell reselection. (Handle reselection priorities) The method for determining reselection priorities may follow the above-described embodiment (FIG. 1E).

At step 1g-47, the cell 1g-07 transmitting SIB1 in an on-demand manner may transmit synchronization signal SSB (Synchronization Signal/PBCH block).

At step 1g-50, the UE 1g-01 may perform frequency measurement for cell reselection. (Perform measurement by using measurement rules for cell reselection) The method of performing frequency measurement may follow the above-described embodiment (FIG. 1E).

At step 1g-55, the UE 1g-01 may determine a candidate target cell that satisfies the cell reselection criteria based on the measurement values obtained at step 1g-50. (Evaluate cell reselection criteria) This may follow the previously described embodiment (FIG. 1E).

Consequently, the UE according to the disclosure may determine the final candidate target cell to be NR cell 1g-07. That is, the NR cell 1g-07 may be the best cell or highest ranked cell for the UE 1g-01.

At step 1g-60, the UE 1g-01 may identify whether the NR cell 1g-07 transmits SIB1 on demand. (Identify whether a candidate target cell transmits SIB1 on demand) This may follow the aforementioned embodiment (FIG. 1F).

At step 1g-65, the UE 1g-01 may not have WUS configuration information to request the NR cell 1g-07 to transmit SIB1. (No WUS configuration)

More specifically, the UE 1g-01 may fail to receive WUS configuration information at step 1g-20, step 1g-40, or step 1g-60 for requesting the NR cell 1g-07 to transmit SIB1.

At step 1g-70, the UE 1g-01 may regard the NR cell 1g-07 as a barred cell, which is prohibited as a candidate for cell selection or cell re-selection for a specific time. (Exclude the barred cell as a candidate for cell selection/reselection for x or for up to x seconds)

The UE should obtain SIB1 to reselect the above NR cell, but since it cannot transmit WUS, the above NR cell may be banned as a barred cell.

At step 1g-75, the UE 1g-01 may select and/or reselect a neighbor cell in the frequency to which the NR cell 1g-07 belongs through at least one of methods 1 to 3 below. (Determine how to perform cell (re-)selection on the same frequency)
- Method 1: if the reselection criteria are satisfied, the neighbor cell in the frequency to which the NR cell 1g-07 belongs may be selected. This is because the UE may select or reselect a neighbor cell in the frequency to which the NR cell 1g-07 belongs. For example, the neighbor cell in the frequency to which the NR cell 1g-07 belongs may be a cell that periodically transmits SIB1, or the UE may have WUS configuration information for the neighbor cell in the frequency to which the NR cell 1g-07 belongs, so that the corresponding cell may be selected or reselected.
- Method 2: according to intraFreqReselection indicated in the MIB received from the NR cell 1g-07, a neighbor cell in the frequency to which the NR cell 1g-07 belongs may be selected and/or reselected. If intraFreqReselection is set to "not allowed", the UE may not select and/or reselect a neighbor cell in the frequency to which the NR cell 1g-07 belongs for a specific time. For example, the specific time may be for 300 seconds or up to 300 seconds. Otherwise, the UE may select or reselect a neighbor cell in the frequency to which the NR cell 1g-07 belongs.
- Method 3: a neighbor cell in the frequency to which the NR cell 1g-07 belongs may be not selected or reselected for a specific time. For example, the specific time may be for 300 seconds or up to 300 seconds. This is because the UE may finally fail in cell reselection as in step 1g-65 for neighbor cells in the frequency to which the NR cell 1g-07 belongs.

FIG. 1H is a diagram illustrating a procedure in which a UE in RRC idle mode (RRC_IDLE) or RRC inactive state (RRC_INACTIVE) reselects a cell that transmits system information block 1 (SIB1) on an on-demand basis according to an embodiment of the disclosure.

A specific cell according to an embodiment of the disclosure may periodically transmit essential system information, which refers to Master Information Block (MIB) and System Information Block 1 (SIB1). The essential system information includes configuration information required for a UE to select or camp on a cell.

Additionally, a specific cell according to an embodiment of the disclosure, unlike the previously described embodiment (FIG. 1E), is characterized by periodically transmitting the MIB but being able to transmit SIB1 on demand. This is because network energy may be saved by transmitting SIB1 when there is a request from a UE. More specifically, if a UE needs to obtain SIB1 for a specific reason, the UE may request a cell that is not transmitting SIB1 to broadcast/transmit SIB1. The aforementioned specific reason may include cases for selecting and/or reselecting a cell. Then, the cell having received the above request may broadcast SIB1.

With reference to FIG. 1H, at step 1h-10, the UE 1h-01 may establish an RRC connection to the NR cell 1h-05 and be in RRC connected mode (RRC_CONNECTED).

At step 1h-15, the UE 1h-01 may transmit a UE capability information message (UECapabilityInformation) to the NR cell 1h-05.

This UE capability information message may include capability information indicating that the UE has the capability of transmitting a wake-up signal (hereinafter WUS), which is a signal for requesting a cell transmitting SIB1 on demand to transmit SIB1. (support of wake-up signal transmission for on-demand SIB1 delivery cell)

At step 1h-20, the NR cell 1h-05 may transmit an RRC release message (RRCRelease) to release the RRC connection to the UE 1h-01 in RRC connected mode.

The information included in the above message may follow at least one of the above embodiments (FIG. 1E and FIG. 1H).

At step 1h-25, the UE 1h-01 in RRC connected mode may transition to RRC idle mode (RRC_IDLE) or RRC inactive mode (RRC_INACTIVE) as in the previously described embodiment after applying the RRC release message.

More specifically, if the RRC release message includes suspend configuration information (suspendConfig), the UE may transition to RRC inactive mode (RRC_INACTIVE). On the other hand, if the above message does not include suspend configuration information, the UE may transition to RRC idle mode (RRC_IDLE). (RRC_IDLE or RRC_INACTIVE)

At step 1h-30, the UE 1h-01 in RRC idle mode or RRC inactive state may obtain MIB and SIB1 as essential system information from the NR cell 1h-05.

At step 1h-35, the UE 1h-01 may perform a cell selection procedure based on step 1h-30. This may follow the previously described embodiment (FIG. 1E).

At step 1h-40, the UE 1h-01 may obtain system information including cell reselection information from the serving cell 1h-05 to perform a cell reselection evaluation process. For example, the system information may include SIB2, SIB3, SIB4, SIB5, and new SIB. This may follow at least one of the aforementioned embodiments (FIG. 1E and FIG. 1H).

At step 1h-45, the UE 1h-01 may determine reselection priorities for cell reselection. (Handle reselection priorities) The method for determining reselection priorities may follow the above-described embodiment (FIG. 1E).

At step 1h-47, the cell 1h-07 transmitting SIB1 in an on-demand manner may transmit synchronization signal SSB (Synchronization Signal/PBCH block).

At step 1h-50, the UE 1h-01 may perform frequency measurement for cell reselection. (Perform measurement by using measurement rules for cell reselection) The method of performing frequency measurement may follow the above-described embodiment (FIG. 1E).

At step 1h-55, the UE 1h-01 may determine a candidate target cell that satisfies the cell reselection criteria based on the measurement values obtained at step 1h-50. (Evaluate cell reselection criteria) This may follow the previously described embodiment (FIG. 1E).

Consequently, the UE according to the disclosure may determine the final candidate target cell to be NR cell 1h-07. That is, the NR cell 1h-07 may be the best cell or highest ranked cell for the UE 1h-01.

At step 1h-60, the UE 1h-01 may identify whether the NR cell 1h-07 transmits SIB1 on demand. (Identify whether a candidate target cell transmits SIB1 on demand) This may follow the aforementioned embodiment (FIG. 1H).

At step 1h-65, the UE 1h-01 may not have WUS configuration information to request the NR cell 1h-07 to transmit SIB1. (No WUS configuration)

More specifically, the UE 1h-01 may fail to receive WUS configuration information at step 1h-20, step 1h-40, or step 1h-60 for requesting the NR cell 1h-07 to transmit SIB1.

At step 1h-70, the UE 1h-01 may determine the NR cell 1h-08 as a second best cell or second highest ranked cell satisfying the cell reselection criteria.

At step 1h-75, based on the essential system information (MIB and SIB1) received from the candidate target cell 1h-08, the UE 1h-01 may determine whether the reception level (Srxlev) and reception quality (Squal) of the candidate target cell satisfy the cell selection criterion referred to as the S-criterion (Equation 1, see embodiment 1E described above) (Srxlev > 0 AND Squal > 0). (Before reselecting a candidate target cell, the UE reads system information from that cell and performs a final suitability check) If the S- criterion is satisfied and the candidate target cell is suitable, the UE may reselect the candidate target cell. (If S-criterion is satisfied, re-select the concerned target cell)

FIG. 1I is a diagram illustrating a procedure in which a UE in RRC idle mode (RRC_IDLE) or RRC inactive state (RRC_INACTIVE) reselects a cell that transmits system information block 1 (SIB1) on an on-demand basis according to an embodiment of the disclosure.

A specific cell according to an embodiment of the disclosure may periodically transmit essential system information, which refers to Master Information Block (MIB) and System Information Block 1 (SIB1). The essential system information includes configuration information required for a UE to select or camp on a cell.

Additionally, a specific cell according to an embodiment of the disclosure, unlike the previously described embodiment (FIG. 1E), is characterized by periodically transmitting the MIB but being able to transmit SIB1 on demand. This is because network energy may be saved by transmitting SIB1 when there is a request from a UE. More specifically, if a UE needs to obtain SIB1 for a specific reason, the UE may request a cell that is not transmitting SIB1 to broadcast/transmit SIB1. The aforementioned specific reason may include cases for selecting and/or reselecting a cell. Then, the cell having received the above request may broadcast SIB1.

With reference to FIG. 1I, at step 1i-10, the UE 1i-01 may establish an RRC connection to the NR cell 1i-05 and be in RRC connected mode (RRC_CONNECTED).

At step 1i-15, the UE 1i-01 may transmit a UE capability information message (UECapabilityInformation) to the NR cell 1i-05.

This UE capability information message may include capability information indicating that the UE has the capability of transmitting a wake-up signal (hereinafter WUS), which is a signal for requesting a cell transmitting SIB1 on demand to transmit SIB1. (support of wake-up signal transmission for on-demand SIB1 delivery cell)

Additionally, in the disclosure, the above message may include an indicator indicating that the UE has the capability of applying the lowest reselection priority to a cell transmitting SIB1 on demand or a frequency composed of cells transmitting SIB1 on demand.

At step 1i-20, the NR cell 1i-05 may transmit an RRC release message (RRCRelease) to release the RRC connection to the UE 1i-01 in RRC connected mode.

The information included in the above message may follow at least one of the previously described embodiments (FIG. 1E and FIG. 1I). Additionally, the above message may include an indicator indicating that the lowest reselection priority is to be applied to a cell transmitting SIB1 on demand or a frequency composed of cells transmitting SIB1 on demand. For reference, a timer value indicating the time for the indicator to be applied may also be included.

At step 1i-25, the UE 1i-01 in RRC connected mode may transition to RRC idle mode (RRC_IDLE) or RRC inactive mode (RRC_INACTIVE) as in the previously described embodiment after applying the RRC release message.

More specifically, if the RRC release message includes suspend configuration information (suspendConfig), the UE may transition to RRC inactive mode (RRC_INACTIVE). On the other hand, if the above message does not include suspend configuration information, the UE may transition to RRC idle mode (RRC_IDLE). (RRC_IDLE or RRC_INACTIVE)

At step 1i-30, the UE 1i-01 in RRC idle mode or RRC inactive state may obtain MIB and SIB1 as essential system information from the NR cell 1i-05.

At step 1i-35, the UE 1i-01 may perform a cell selection procedure based on step 1i-30. This may follow the previously described embodiment (FIG. 1E).

At step 1i-40, the UE 1i-01 may obtain system information including cell reselection information from the serving cell 1i-05 to perform a cell reselection evaluation process. For example, the system information may include SIB2, SIB3, SIB4, SIB5, and new SIB. This may follow at least one of the aforementioned embodiments (FIG. 1E and FIG. 1I). Additionally, in the disclosure, a list of cells transmitting SIB1 on demand or a frequency list composed of cells transmitting SIB1 on demand may be included in the system information.

At step 1i-45, the UE 1i-01 may determine reselection priorities for cell reselection. (Handle reselection priorities) The method for determining reselection priorities may follow the above-described embodiment (FIG. 1E). The UE 1i-01 according to the disclosure may determine the cell(s) transmitting SIB1 on demand or the frequency(s) composed of cells transmitting SIB1 on demand as having the lowest reselection priority. This may help save energy of the base station by preventing the UE from reselecting the cells transmitting SIB1 on demand as much as possible.

At step 1i-47, the cell 1i-07 transmitting SIB1 in an on-demand manner may transmit synchronization signal SSB (Synchronization Signal/PBCH block).

At step 1i-50, the UE 1i-01 may perform frequency measurement for cell reselection. (Perform measurement by using measurement rules for cell reselection) The method of performing frequency measurement may follow the above-described embodiment (FIG. 1E).

At step 1i-55, the UE 1i-01 may determine a candidate target cell that satisfies the cell reselection criteria based on the measurement values obtained at step 1i-50. (Evaluate cell reselection criteria) This may follow the previously described embodiment (FIG. 1E).

Consequently, the UE according to the disclosure may determine the final candidate target cell to be NR cell 1i-07. That is, the NR cell 1i-07 may be the best cell or highest ranked cell for the UE 1i-01.

At step 1i-60, the UE 1i-01 may identify whether the NR cell 1i-07 transmits SIB1 on demand. (Identify whether a candidate target cell transmits SIB1 on demand) This may follow the aforementioned embodiment (FIG. 1F).

At step 1i-65, to receive SIB1 from the NR cell 1i-07, the UE 1i-01 may transmit a wake-up signal (WUS). (No WUS configuration)

More specifically, the UE 1i-01 may transmit WUS based on the WUS configuration information received at step 1i-20, step 1i-40, or step 1i-60.

At step 1i-70, the NR cell 1i-07 may transmit SIB1, and the UE 1i-01 may receive it. For reference, the UE 1i-01 may receive the MIB transmitted from the NR cell 1i-07 at step 1i-70 or at an earlier step. The earlier step may include step 1i-55 or step 1i-60.

At step 1i-75, based on the essential system information (e.g., MIB and SIB1) received from the candidate target cell 1i-07, the UE 1i-01 may determine whether the reception level (Srxlev) and reception quality (Squal) of the candidate target cell satisfy the cell selection criterion referred to as the S-criterion (Equation 1) (Srxlev > 0 AND Squal > 0). (UE performs a final suitability check) [Equation 1] $Srxlev > 0 AND Squal > 0$
where
$Srxlev = {Q}_{rxlevmeas} - \left({Q}_{rxlevmin}+{Q}_{rxlevminoffset}\right) - {P}_{compensation} - {Qoffset}_{temp} ,$
$Squal = {Q}_{qualmeas} - \left({Q}_{qualmin}+{Q}_{qualminoffset}\right) - {Qoffset}_{temp} .$

If the S-criterion is satisfied and the candidate target cell is suitable, the UE may reselect the candidate target cell. (If S-criterion is satisfied, re-select the concerned target cell)

FIG. 1J is a diagram illustrating a procedure in which a UE in RRC idle mode (RRC_IDLE) or RRC inactive state (RRC_INACTIVE) reselects a cell that transmits system information block 1 (SIB1) on an on-demand basis according to an embodiment of the disclosure.

A specific cell according to an embodiment of the disclosure may periodically transmit essential system information, which refers to Master Information Block (MIB) and System Information Block 1 (SIB1). The essential system information includes configuration information required for a UE to select or camp on a cell.

Additionally, a specific cell according to an embodiment of the disclosure, unlike the previously described embodiment (FIG. 1E), is characterized by periodically transmitting the MIB but being able to transmit SIB1 on demand. This is because network energy may be saved by transmitting SIB1 when there is a request from a UE. More specifically, if a UE needs to obtain SIB1 for a specific reason, the UE may request a cell that is not transmitting SIB1 to broadcast/transmit SIB1. The aforementioned specific reason may include cases for selecting and/or reselecting a cell. Then, the cell having received the above request may broadcast SIB1.

With reference to FIG. 1J, at step 1j-10, the UE 1j-01 may establish an RRC connection to the NR cell 1j-05 and be in RRC connected mode (RRC_CONNECTED).

At step 1j-15, the UE 1j-01 may transmit a UE capability information message (UECapabilityInformation) to the NR cell 1j-05.

This UE capability information message may include capability information indicating that the UE has the capability of transmitting a wake-up signal (hereinafter WUS), which is a signal for requesting a cell transmitting SIB1 on demand to transmit SIB1. (support of wake-up signal transmission for on-demand SIB1 delivery cell)

At step 1j-20, the NR cell 1j-05 may transmit an RRC release message (RRCRelease) to release the RRC connection to the UE 1j-01 in RRC connected mode. The information included in the above message may follow at least the above-described embodiment. Additionally, the above message may include at least one of the following.
- An indicator indicating whether the UE 1j-01 is allowed to transmit WUS
- Configuration information required when the UE 1j-01 transmits WUS
   ▪ The above configuration information may be set per frequency or per frequency per cell.
   ▪ The above configuration information may refer to one or more random access preambles. For example, it may refer to a preamble representing the first message (Msg1) transmitted during a random access procedure.
   ▪ The above configuration information may refer to one or more random access occasions (PRACH occasions) for preamble transmission. For example, a PRACH occasion may indicate a frequency and/or time at which a preamble is to be transmitted during the random access procedure.

The UE 1j-01 in RRC connected mode may transition to RRC idle mode (RRC_IDLE) or RRC inactive mode (RRC_INACTIVE) as in the previously described embodiment after applying the RRC release message (1j-25).

At step 1j-30, the UE 1j-01 in RRC idle mode or RRC inactive state may obtain MIB and SIB1 as essential system information from the NR cell 1j-05.

At step 1j-35, the UE 1j-01 may perform a cell selection procedure based on step 1j-30. This may follow at least one of the previously described embodiments.

At step 1j-40, the UE 1j-01 may obtain system information including cell reselection information from the serving cell 1j-05 to perform a cell reselection evaluation process. For example, the system information may include SIB2, SIB3, SIB4, SIB5, and new SIB. This may follow at least one of the aforementioned embodiments.

Additionally, the disclosure proposes that a list of cells transmitting SIB1 on demand per frequency be further signaled in the system information. Specifically, a per-frequency cell list may be broadcast in the system information, which may refer to a list of cells transmitting SIB1 on demand. Here, cell reselection parameters applied to the S criterion and/or R criterion may be signaled separately. For example, parameters that may be applied to a cell transmitting SIB1 on demand may mean at least one of the following.
- At least one of q-RxLevmin, q-QualMin, qRxLevMinOffsetCell, or q-QualMinOffsetCell applied to the S criterion
- q-OffsetCell applied to the R criterion

At step 1j-45, the UE 1j-01 may determine reselection priorities for cell reselection. (Handle reselection priorities) This may follow the above-described embodiment (FIG. 1E).

At step 1j-47, the cell 1j-07 transmitting SIB1 in an on-demand manner may transmit synchronization signal SSB (Synchronization Signal/PBCH block).

At step 1j-50, the UE 1j-01 may perform frequency measurement for cell reselection. (Perform measurement by using measurement rules for cell reselection) This may follow the above-described embodiment (FIG. 1E).

At step 1j-55, the UE 1j-01 may determine a candidate target cell that satisfies the cell reselection criteria based on the measurement values obtained at step 1j-50. (Evaluate cell reselection criteria) This may follow the previously described embodiment (FIG. 1E). Here, a candidate target cell satisfying the cell reselection criteria may be determined by applying the parameters described above at step 1j-40. Consequently, the UE according to the disclosure may determine the final candidate target cell to be NR cell 1j-07. That is, the NR cell 1j-07 may be the best cell or highest ranked cell for the UE 1j-01.

At step 1j-60, the UE 1j-01 may identify whether the NR cell 1j-07 transmits SIB1 on demand. (Identify whether a candidate target cell transmits SIB1 on demand) This may follow at least one of the aforementioned embodiments.

At step 1j-65, to receive SIB1 from the NR cell 1j-07, the UE 1j-01 may transmit a wake-up signal (WUS). This may follow at least one of the aforementioned embodiments.

At step 1j-70, the NR cell 1j-07 may transmit SIB1, and the UE 1j-01 may receive it. For reference, the UE 1j-01 may receive the MIB transmitted from the NR cell 1j-07 at step 1j-70 or at an earlier step. The earlier step may include step 1j-55 or step 1j-60.

At step 1j-75, based on the essential system information (e.g., MIB and SIB1) received from the candidate target cell 1j-07, the UE 1j-01 may determine whether the reception level (Srxlev) and reception quality (Squal) of the candidate target cell satisfy the cell selection criterion referred to as the S-criterion (Equation 1) (Srxlev > 0 AND Squal > 0). (UE performs a final suitability check) [Equation 1] $Srxlev > 0 AND Squal > 0$
where
$Srxlev = {Q}_{rxlevmeas} - \left({Q}_{rxlevmin}+{Q}_{rxlevminoffset}\right) - {P}_{compensation} - {Qoffset}_{temp} ,$
$Squal = {Q}_{qualmeas} - \left({Q}_{qualmin}+{Q}_{qualminoffset}\right) - {Qoffset}_{temp} .$

If the S-criterion is satisfied and the candidate target cell is suitable, the UE may reselect the candidate target cell. (If S-criterion is satisfied, re-select the concerned target cell)

FIG. 1K is a block diagram illustrating the internal structure of a UE according to an embodiment of the disclosure.

With reference to the drawing, the UE includes a radio frequency (RF) processor 1k-10, a baseband processor 1k-20, a storage 1k-30, and a controller 1k-40.

The RF processor 1k-10 performs a function for transmitting and receiving a signal through a radio channel, such as signal band conversion and amplification. That is, the RF processor 1k-10 performs up-conversion of a baseband signal provided from the baseband processor 1k-20 into an RF-band signal and transmits it through an antenna, and performs down-conversion of an RF-band signal received through an antenna into a baseband signal. For example, the RF processor 1k-10 may include a transmission filter, a reception filter, an amplifier, a mixer, an oscillator, a digital-to-analog converter (DAC), and an analog-to-digital converter (ADC). Although only one antenna is illustrated in the drawing, the UE may be provided with a plurality of antennas. Also, the RF processor 1k-10 may include a plurality of RF chains. Further, the RF processor 1k-10 may perform beamforming. For beamforming, the RF processor 1k-10 may adjust phases and magnitudes of individual signals transmitted and received through the plural antennas or antenna elements. Further, the RF processor may perform MIMO, and may receive several layers during an MIMO operation.

The baseband processor 1k-20 performs conversion between a baseband signal and a bit sequence in accordance with the physical layer specification of the system. For example, during data transmission, the baseband processor 1k-20 generates complex symbols by encoding and modulating a transmission bit sequence. Further, during data reception, the baseband processor 1k-20 restores a reception bit sequence by demodulating and decoding a baseband signal provided from the RF processor 1k-10. For example, in the case of utilizing orthogonal frequency division multiplexing (OFDM), for data transmission, the baseband processor 1k-20 generates complex symbols by encoding and modulating a transmission bit sequence, maps the complex symbols to subcarriers, and composes OFDM symbols through inverse fast Fourier transform (IFFT) operation and cyclic prefix (CP) insertion. Further, for data reception, the baseband processor 1k-20 divides a baseband signal provided from the RF processor 1k-10 in units of OFDM symbols, restores the signals mapped to subcarriers through fast Fourier transform (FFT), and restores the reception bit sequence through demodulation and decoding.

The baseband processor 1k-20 and the RF processor 1k-10 transmit and receive signals as described above. Hence, the baseband processor 1k-20 and the RF processor 1k-10 may be called a transmitter, a receiver, a transceiver, or a communication unit. Further, to support different radio access technologies, at least one of the baseband processor 1k-20 or the RF processor 1k-10 may include a plurality of communication modules. In addition, to process signals of different frequency bands, at least one of the baseband processor 1k-20 or the RF processor 1k-10 may include different communication modules. For example, the different radio access technologies may include a wireless LAN (e.g., IEEE 802.11), a cellular network (e.g., LTE), and the like. In addition, the different frequency bands may include a super high frequency (SHF) band (e.g., 2.NRHz, NRhz) and a millimeter wave (mmWave) band (e.g., 60 GHz).

The storage 1k-30 stores data such as basic programs, application programs, and configuration information for the operation of the UE. In particular, the storage 1k-30 may store information about a second access node that performs wireless communication using a second radio access technology. The storage 1k-30 provides stored data in response to a request from the controller 1k-40.

The controller 1k-40 controls the overall operation of the UE. For example, the controller 1k-40 transmits and receives signals through the baseband processor 1k-20 and the RF processor 1k-10. Further, the controller 1k-40 writes or reads data to or from the storage 1k-40. To this end, the controller 1k-40 may include at least one processor. For example, the controller 1k-40 may include a communication processor (CP) for controlling communication and an application processor (AP) for controlling higher layers such as application programs.

FIG. 1L is a block diagram illustrating the internal structure of a New Radio (NR) base station according to an embodiment of the disclosure.

As shown in the drawing, the base station includes an RF processor 1l-10, a baseband processor 1l-20, a backhaul communication unit 1l-30, a storage 1l-40, and a controller 1l-50.

The RF processor 1l-10 performs a function for transmitting and receiving a signal through a radio channel, such as signal band conversion and amplification. That is, the RF processor 1l-10 performs up-conversion of a baseband signal provided from the baseband processor 1l-20 into an RF-band signal and transmits the converted signal through an antenna, and performs down-conversion of an RF-band signal received through an antenna into a baseband signal. For example, the RF processor 1l-10 may include a transmission filter, a reception filter, an amplifier, a mixer, an oscillator, a DAC, and an ADC. Although only one antenna is illustrated in the drawing, the first access node may be provided with a plurality of antennas. Additionally, the RF processor 1l-10 may include a plurality of RF chains. Further, the RF processor 1l-10 may perform beamforming. For beamforming, the RF processor 1l-10 may adjust phases and amplitudes of individual signals transmitted and received through plural antennas or antenna elements. The RF processor may perform downlink MIMO operation by transmitting one or more layers.

The baseband processor 1l-20 performs conversion between a baseband signal and a bit sequence in accordance with the physical layer specification of a first radio access technology. For example, for data transmission, the baseband processor 1l-20 generates complex symbols by encoding and modulating a transmission bit sequence. Further, for data reception, the baseband processor 1l-20 restores a reception bit sequence by demodulating and decoding a baseband signal provided from the RF processor 1l-10. For example, in the case of utilizing OFDM, for data transmission, the baseband processor 1l-20 generates complex symbols by encoding and modulating a transmission bit sequence, maps the complex symbols to subcarriers, and composes OFDM symbols through IFFT operation and CP insertion. Further, for data reception, the baseband processor 1l-20 divides a baseband signal provided from the RF processor 1l-10 in units of OFDM symbols, restores the signals mapped to subcarriers through FFT operation, and restores the reception bit sequence through demodulation and decoding. The baseband processor 1l-20 and the RF processor 1l-10 transmit and receive signals as described above. Hence, the baseband processor 1l-20 and the RF processor 1l-10 may be called a transmitter, a receiver, a transceiver, a communication unit, or a wireless communication unit.

The backhaul communication unit 1l-30 provides an interface for communication with other nodes in the network. That is, the backhaul communication unit 1l-30 converts a bit sequence, which is to be transmitted from the primary base station to another node, for example, a secondary base station or the core network, into a physical signal, and converts a physical signal received from another node into a bit sequence.

The storage 1l-40 stores data such as basic programs, application programs, and configuration information for the operation of the primary base station. In particular, the storage 1l-40 may store information on a bearer allocated to a connected UE and measurement results reported from the connected UE. Further, the storage 1l-40 may store information used as a criterion for determining whether to provide or suspend multi-connectivity to the UE. In addition, the storage 1l-40 provides stored data in response to a request from the controller 1l-50.

The controller 1l-50 controls the overall operation of the primary base station. For example, the controller 1l-50 transmits and receives signals through the baseband processor 1l-20 and the RF processor 1l-10 or through the backhaul communication unit 1l-30. Further, the controller 1l-50 writes or reads data to or from the storage 1l-40. To this end, the controller 1l-50 may include at least one processor.

The methods according to the embodiments described in the claims or specification of the disclosure may be implemented in the form of hardware, software, or a combination thereof.

When implemented in software, a computer-readable storage medium storing one or more programs (software modules) may be provided. The one or more programs stored in the computer-readable storage medium may be configured to be executable by one or more processors of an electronic device. The one or more programs may include instructions that cause the electronic device to execute the methods according to the embodiments described in the claims or specification of the disclosure.

Such a program (software module, software) may be stored in a random access memory, a nonvolatile memory such as a flash memory, a read only memory (ROM), an electrically erasable programmable read only memory (EEPROM), a magnetic disc storage device, a compact disc ROM (CD-ROM), a digital versatile disc (DVD), other types of optical storage devices, or a magnetic cassette. Or, such a program may be stored in a memory composed of a combination of some or all of them. In addition, a plurality of component memories may be included.

In addition, such a program may be stored in an attachable storage device that can be accessed through a communication network such as the Internet, an intranet, a local area network (LAN), a wide LAN (WLAN), or a storage area network (SAN), or through a communication network composed of a combination thereof. Such a storage device may access the equipment that carries out an embodiment of the disclosure through an external port. In addition, a separate storage device on a communication network may access the equipment that carries out an embodiment of the disclosure.

In the disclosure, the terms "computer program product" or "computer readable medium" are used to collectively refer to media such as a memory, a hard disk installed in a hard disk drive, and signals. These "computer program product" or "computer readable medium" are configurations provided in a method for reporting UE capability in a wireless communication system according to the disclosure.

The machine-readable storage medium may be provided in the form of a non-transitory storage medium. Here, the term "non-transitory" simply means that the storage medium is a tangible device and does not include a signal (e.g., electromagnetic wave), but this term does not distinguish whether data is stored semi-permanently or temporarily in the storage medium. For example, a "non-transitory storage medium" may include a buffer where data is temporarily stored.

According to an embodiment, a method according to various embodiments disclosed in this document may be provided by being included in a computer program product. The computer program product may be traded as a commodity between a seller and a purchaser. A computer program product may be distributed in the form of a machine-readable storage medium (e.g., compact disc read only memory (CD-ROM)) or be distributed online (e.g., download or upload) directly between two user devices (e.g., smartphones) through an application store (e.g., PlayStore ^{™}). For on-line distribution, at least a portion of the computer program product (e.g., downloadable app) may be temporarily stored or temporarily created in a machine readable storage medium such as a memory of a manufacturer's server, an application store's server, or a relay server.

In the embodiments of the disclosure described above, the elements included in the disclosure are expressed in a singular or plural form according to the presented specific embodiment. However, the singular or plural expression is appropriately selected for ease of description according to the presented situation, and the disclosure is not limited by a single element or plural elements. Those elements described in a plural form may be configured as a single element, and those elements described in a singular form may be configured as plural elements.

Meanwhile, specific embodiments have been described in the detailed description of the disclosure, but various modifications are possible without departing from the scope of the disclosure. Therefore, the scope of the disclosure should not be limited to those embodiments described above, but should be determined according to the patent claims described later and their equivalents.

## Claims

1. A method performed by a terminal in a wireless communication system, the method comprising:
receiving, from a serving cell, at least one piece of system information including at least one of cell reselection priority setting information or wake-up signal (WUS) configuration information;
determining a final candidate target cell based on the cell reselection priority setting information;
determining whether the final candidate target cell is a cell that supports System Information Block 1 (SIB1) on demand based on the WUS configuration information;
transmitting a WUS to the final candidate target cell in case that the final candidate target cell is a cell that supports SIB1 on demand;
receiving SIB1 from the final candidate target cell in response to transmitting the WUS; and
determining whether to perform cell reselection to the final candidate target cell based on SIB1.

2. The method of claim 1, wherein in case that the final candidate target cell is a cell that does not support SIB1 on demand, the final candidate target cell is determined to be a barred cell.

3. The method of claim 1, wherein the WUS configuration information is set per cell (physical cell identity, PCI) and per frequency.

4. The method of claim 1, wherein:
the system information includes one of System Information Block 2 (SIB 2), SIB3, SIB4, SIB5, and new SIB; and
the WUS configuration information includes configuration information related to transmission of a random access preamble.

5. A method performed by a base station supporting serving cells in a wireless communication system, the method comprising:
transmitting Master Information Block (MIB) and System Information Block 1 (SIB1) to a terminal; and
transmitting, to the terminal, at least one piece of system information including at least one of cell reselection priority setting information or wake-up signal (WUS) configuration information,
wherein the WUS configuration information is used to determine whether a final candidate target cell determined based on the cell reselection priority setting information is a cell that supports SIB1 on demand,
wherein in case that the final candidate target cell is a cell that supports SIB1 on demand, the final candidate target cell transmits SIB1 to the terminal in response to a WUS,
wherein SIB1 is used to determine whether to perform cell reselection to the final candidate target cell.

6. The method of claim 5, wherein in case that the final candidate target cell is a cell that does not support SIB1 on demand, the final candidate target cell is determined to be a barred cell.

7. The method of claim 5, wherein the WUS configuration information is set per cell (physical cell identity, PCI) and per frequency.

8. The method of claim 5, wherein:
the system information includes one of System Information Block 2 (SIB 2), SIB3, SIB4, SIB5, and new SIB; and
the WUS configuration information includes configuration information related to transmission of a random access preamble.

9. A terminal in a wireless communication system, comprising:
a transceiver for transmitting and receiving signals; and
a controller,
wherein the controller is configured to:
receive, from a serving cell, at least one piece of system information including at least one of cell reselection priority setting information or wake-up signal (WUS) configuration information;
determine a final candidate target cell based on the cell reselection priority setting information;
determine whether the final candidate target cell is a cell that supports System Information Block 1 (SIB1) on demand based on the WUS configuration information;
transmit a WUS to the final candidate target cell in case that the final candidate target cell is a cell that supports SIB1 on demand;
receive SIB1 from the final candidate target cell in response to transmitting the WUS; and
determine whether to perform cell reselection to the final candidate target cell based on SIB1.

10. The terminal of claim 9, wherein in case that the final candidate target cell is a cell that does not support SIB1 on demand, the controller is configured to determine the final candidate target cell to be a barred cell.

11. The terminal of claim 9, wherein the WUS configuration information is set per cell (physical cell identity, PCI) and per frequency.

12. The terminal of claim 9, wherein:
the system information includes one of System Information Block 2 (SIB 2), SIB3, SIB4, SIB5, and new SIB; and
the WUS configuration information includes configuration information related to transmission of a random access preamble.

13. A base station supporting serving cells in a wireless communication system, comprising:
a transceiver for transmitting and receiving signals; and
a controller,
wherein the controller is configured to:
transmit Master Information Block (MIB) and System Information Block 1 (SIB1) to a terminal; and
transmit, to the terminal, at least one piece of system information including at least one of cell reselection priority setting information or wake-up signal (WUS) configuration information,
wherein the WUS configuration information is used to determine whether a final candidate target cell determined based on the cell reselection priority setting information is a cell that supports SIB1 on demand,
wherein in case that the final candidate target cell is a cell that supports SIB1 on demand, the final candidate target cell transmits SIB1 to the terminal in response to a WUS,
wherein SIB1 is used to determine whether to perform cell reselection to the final candidate target cell.

14. The base station of claim 13, wherein in case that the final candidate target cell is a cell that does not support SIB1 on demand, the final candidate target cell is determined to be a barred cell.

15. The base station of claim 13, wherein:
the WUS configuration information is set per cell (physical cell identity, PCI) and per frequency;
the system information includes one of System Information Block 2 (SIB 2), SIB3, SIB4, SIB5, and new SIB; and
the WUS configuration information includes configuration information related to transmission of a random access preamble.
